# EUROPÄISCHE PATENTSCHRIFT

(11) **EP 3 754 220 B1**
(45) Veröffentlichungstag und Bekanntmachung des Hinweises auf die Patenterteilung: **30.03.2022**
(21) Anmeldenummer: 20181070.2
(22) Anmeldetag: 19.06.2020
(51) Int. Cl.: F16D 55/224, F15B 15/10

(54) **AKTUATORVORRICHTUNG UND AKTUATORSYSTEM**
ACTUATOR DEVICE AND ACTUATOR SYSTEM
DISPOSITIF ACTIONNEUR ET SYSTÈME D'ACTIONNEUR

(30) Priorität: 19.06.2019 DE 102019116623
(43) Veröffentlichungstag der Anmeldung: 23.12.2020
(73) Patentinhaber: KNORR-BREMSE Systeme für Schienenfahrzeuge GmbH, 80809 München (DE)
(72) Erfinder: LOEBNER, Reinhard, 81829 München (DE)
(74) Vertreter: Prüfer & Partner mbB Patentanwälte · Rechtsanwälte

(56) Entgegenhaltungen:
- EP-A1- 0 470 025
- EP-A1- 2 376 318
- DE-A1- 10 218 112
- DE-A1-102009 049 817
- US-A- 4 553 644
- US-A1- 2010 163 351

## Beschreibung

Die vorliegende Erfindung betrifft eine Aktuatorvorrichtung, welche als Energiespeicher durch das Einwirken eines Fluiddrucks auf die Vorrichtung verwendet werden kann, wobei die Aktuatorvorrichtung bei Abnahme des Fluiddrucks die gespeicherte Energie abgeben kann. Dies betrifft insbesondere auch ein Aktuatorsystem, in dem die abgebbare Energie zur Ausübung einer Aktuatorfunktion verwendbar ist.

Bekannte Formen der fluidtechnischen Energiespeicherung zeichnen sich durch die funktionale Trennung von fluidführenden Teilen, wie Zylindern, und energiespeichernden Teilen, wie Kraftspeichern, aus. Bei Krafterzeugen wird dies zum Beispiel mit einer Zylinder-/Kolben-Baugruppe und einer damit in Verbindung gesetzten mechanischen Feder realisiert. Bei Membran- oder Blasenspeichern trennt meist eine Elastomermembrane den fluidbefüllten Teil des Speichers vom gasgefüllten Teil des Speichers, in dem die Energie durch Kompression und damit einhergehender Volumenverringerung gespeichert wird. Bei der gasbetriebenen Bauform führen die thermischen Effekte zu Energieverlusten. Üblicherweise kommen bei den Speichern zudem Bauelemente zum Einsatz die verschleiß- oder ermüdungsbehaftet sind.

Einsatzgebiete von Zylinder-Kolben-Baugruppen zur fluidtechnischen Energiespeicherung sind beispielsweise Bremssysteme von Nutzfahrzeugen. Üblicherweise werden beispielsweise Fahrzeuge heutzutage häufig mit Scheibenbremsen ausgestattet, welche über ein hydraulisches oder pneumatisches Bremssystem gesteuert werden. Diese Kombination stellt eine Möglichkeit dar, den Bremsdruck gut und sicher zu dosieren und somit die auf das Fahrzeug wirkende Bremskraft zu steuern. Zur Durchführung einer Bremsung wird in einem Bremszylinder ein Druck auf einen Bremskolben aufgebracht, der vorgesehene Bremsbeläge an eine Bremsscheibe anlegt, welche drehfest mit einem Rad des Fahrzeugs verbunden ist. Durch die entstehende Reibung zwischen Bremsscheibe und Bremsbelägen kann das Fahrzeug gebremst werden. Je höher dabei der Druck (Bremsdruck) auf den Bremskolben wirkt, desto größer wird die Reibung zwischen Bremsbelag und Bremsscheibe und desto stärker ist die Verzögerung. Das bauliche Element bestehend aus Bremszylinder und dem sich darin axial beweglichen Bremskolben wird als Bremsaktuator bezeichnet.

Wird der auf den Bremskolben wirkende Bremsdruck reduziert bzw. vollständig entfernt, wird der Bremskolben in die Ausgangsstellung zurückgeführt. Dies geschieht in der Regel über eine vorgespannte Feder, die beim Betätigen der Bremse mittels des Bremsdrucks auf den Bremskolben vorgespannt wird. Durch das Zurückführen des Bremskolbens wird der Kontakt zwischen Bremsbelag und Bremsscheibe wieder gelöst und die Bremswirkung wird aufgehoben.

Einen wichtigen Bestandteil dieses Mechanismus stellen dabei Dichtungen dar, die zwischen Bremskolben und dem Bremszylinder angeordnet sind. Es handelt sich dabei um dynamisch wirksame Dichtungen, die sicherstellen, dass der auf den Bremskolben aufgebrachte Bremsdruck nicht zwischen Bremszylinder und Bremskolben entweichen kann. Durch insbesondere die Bewegung des Bremskolbens und dem auf die Dichtungen wirkenden Druck, sind diese jedoch einer hohen Belastung ausgesetzt, was einen hohen Verschleiß der Dichtungen nach sich zieht. Ein Austausch der Dichtungen ist aufgrund deren Funktionsweise zwischen Bremszylinder und Bremskolben mit vergleichsweise hohem Aufwand verbunden.

Die EP 0 470 025 A1 offenbart zudem einen Aktuator einer Fahrzeugaufhängung, der zwei Verschlussplatten umfasst, die einen Balg abschließen, der durch eine unter Druck stehende Flüssigkeit aufblasbar ist, wobei das Ende einer Zugstange an einer der Platten befestigt ist. Die Zugstange ist fest mit einer Verschlussplatte verbunden und verläuft durch die andere Verschlussplatte, die hierzu Mittel zum Abdichten und Führen der Zugstange aufweist.

Vor diesem Hintergrund ist es Aufgabe der vorliegenden Erfindung eine Aktuatorvorrichtung und ein Aktuatorsystem bereitzustellen, die durch Einwirken eines Fluiddrucks eine Energiespeicherung verursacht und bei Wegfall des Fluiddrucks eine Energieabgabe bewirkt, ohne dabei sich bewegende Dichtungen zu benötigen.

Diese Aufgabe wird mit einer Aktuatorvorrichtung und einem Aktuatorsystem gemäß der Hauptansprüche gelöst. Vorteilhafte Weiterbildungen der Erfindung sind in den Unteransprüchen enthalten.

Die erfindungsgemäße Aktuatorvorrichtung besteht aus mindestens einem entlang einer Längsachse länglich ausgebildeten Körper, der eine Mantelfläche aufweist, welche sich um die Längsachse des Körpers erstreckt und einen Hohlraum bildet. Die Längsachse des Körpers entspricht also auch der Längsachse der Mantelfläche und des Hohlraums. Ferner weist die Mantelfläche zumindest abschnittsweise eine Elastizität, vorzugsweise in Richtung ihrer Längsachse, auf. Die Elastizität wird dabei als Eigenschaft der Mantelfläche verstanden unter Krafteinwirkung ihre Form zu verändern ohne sich dabei plastisch zu verformen und bei Wegfall der einwirkenden Kraft in die Ursprungsform zurückzukehren, wie beispielsweise von einer Spiralfeder bekannt. Die Elastizität der Mantelfläche entspricht dabei der Federsteifigkeit einer beispielsweise in einem oben beschriebenen herkömmlichen Bremsaktuator verwendeten Feder, die den Bremskolben nach Wegfall des Bremsdrucks in die Ausgangsposition bringt. Darüber hinaus wird der Hohlraum an einer Stirnseite in axialer Richtung der Längsachse durch eine Grundplatte begrenzt. Zudem weist die Vorrichtung eine den Hohlraum auf der einer der Grundplatte gegenüberliegenden Stirnseite in axialer Richtung der Längsachse dichtend abschließende stirnseitige Begrenzung auf. Weiterhin ist die Aktuatorvorrichtung derart konfiguriert, dass der Hohlraum durch Einleitung oder Ausleitung eines Fluids mit einem Druck beaufschlagbar ist. Das Fluid kann beispielsweise über eine Fluidöffnung oder einen Fluidanschluss in den Hohlraum eingeleitet oder ausgeleitet werden. Somit kann die Aktuatorvorrichtung durch den Druck aufgrund der vorbestimmten Elastizität elastisch gelängt oder gestaucht werden kann. Wird beispielsweise ausgehend von einer Ausgangsabmessung der Aktuatorvorrichtung ein Fluid eingeleitet, also eine positive Druckbeaufschlagung vorgenommen, längt sich die Aktuatorvorrichtung. Eine Stauchung kann unter diesen Umständen durch Ausleitung und somit negativer Druckbeaufschlagung erreicht werden. Somit ist der Hohlraum der Vorrichtung dazu konfiguriert, mit einem Über- oder Unterdruck beaufschlagt zu werden. Durch den beaufschlagten Druck lässt sich eine Längung oder eine Stauchung der Vorrichtung erzielen, wodurch beispielsweise eine Längsbewegung eines Bremskolbens zur Betätigung einer Scheibenbremse verursacht werden kann. Die Elastizität der Mantelfläche ist dabei beispielsweise so gestaltet, dass sich diese aufgrund ihrer Gestalt in Abhängigkeit des aufgebrachten Druckes elastisch dehnt und dabei Fluidvolumen aufnimmt. Im gedehnten Zustand steht der Druck des Fluids im Kräftegleichgewicht mit der elastischen Verformung der Mantelfläche bzw. des gebildeten Hohlraumvolumens. Wird auf der zum Beispiel durch die Öffnung eines Ventiles eine Druckabsenkung möglich, wird die in der Mantelfläche in Form von Formänderungsarbeit gespeicherte Energie zu einer Rekontraktion führen und das Fluid aus dem Hohlraum herausfördern.

Allgemein kann folglich durch Zufuhr von Energie, beispielsweise durch eine Beaufschlagung mit Druck, vorzugsweise auf die stirnseitige Begrenzung der Vorrichtung, eine Längung beziehungsweise Stauchung der Vorrichtung erzielt werden, insbesondere aufgrund einer so vorbegebenen Formgebung der Mantelfläche, dass sie eine Bewegung der Aktuatorvorrichtung ermöglicht, wodurch eine Bewegung in Längsrichtung des Aktuators erfolgt. Aufgrund der Elastizität der Mantelfläche in Richtung der Längsachse der Vorrichtung kehrt die Vorrichtung nach der Wegnahme der äußeren Energiezufuhr wieder in ihre ursprüngliche Gestalt zurück. Die vom Aktuator induzierte Bewegung geht also erfindungsgemäß mit einer elastischen Verformung der Vorrichtung einher, vorzugsweise in Form von Längung oder Stauchung, sodass keine dynamischen Dichtungen notwendig sind, und die Möglichkeit besteht, die zum Isolieren des aufgebrachten Drucks von der Umgebung notwendigen Dichtungen derart vorzusehen, dass sie selbst keinen Bewegungen ausgesetzt sind und lediglich eine statische Beanspruchung erfahren und ihr Verschleiß daher deutlich verringert wird.

Demnach wird die bisherige aufgelöste Bauform bestehend aus Hydraulikzylinder und elastischer Feder in eine Bauform überführt, bei der die Gestaltung die Wirksamkeit des Druckes und die elastische Wirkung der Feder in einem Bauteil vereint. Die Aktuatorvorrichtung umfasst somit eine bauliche Einheit, gefertigt aus einem elastischen Material, mit einer axial fest eingespannten und einer zweiten axial beweglichen, verschlossenen Seite, die durch Zuführung und Entnahme eines Fluides mit Druck beaufschlagt und entlastet werden kann. Die exemplarische Zuführung von Druck und damit Volumen, also Energie, führt aufgrund der geometrischen Gestalt zu einer axialen Längung der Aktuatorvorrichtung in Kombination mit einer Übertragung eben dieser Energie in die Formänderung des Werkstoffes der Mantelfläche. Durch Druckabsenkung im Fluidkreislauf kommt es zur Volumenabnahme und Rückverformung der Einheit, diese kann als mechanische Kraft bzw. Energie zur Betätigung mechanischer Vorgänge zur Wirkung gebracht werden, z.B. der Zuspannung einer mechanischen Betätigungseinrichtung. Ebenso kann die Rückförderung des Fluids gegen ein Druckgefälle zum Antrieb einer (anderen) hydraulischen Maschine genutzt werden.

Dadurch können beispielsweise Bremsaktuatoren bereitgestellt werden, ohne bewegte und druckbeaufschlagte Dichtungen verwenden zu müssen. Vielmehr sind nur noch statische, druckbeaufschlagte Dichtungen erforderlich. Dadurch entfällt der Verschleiß dieser "bewegten" Dichtungen und die Einsatzzeit dieser Geräte erhöht sich maßgeblich.

Zudem ist die Aktuatorvorrichtung derart konfiguriert ist, dass die über die Längung oder Stauchung in Form von Formänderungsarbeit gespeicherte Energie als Bewegungsenergie zur Ausübung einer Aktuatorfunktion zur Verfügung stellbar ist.

Insbesondere ist die Ausübung einer Aktuatorfunktion auf eine von der Längung oder Stauchung unabhängige Funktion gerichtet. Das heißt, die Längung oder Stauchung ist nicht auf eine durch die Längung oder Stauchung direkt ausgeübte Bewegungsfunktion gerichtet, sondern bemisst sich nach der durch die Formänderungsarbeit bereitzustellende Energie, die nach zumindest nach teilweise Aufhebung der Druckbeaufschlagung als Bewegungsenergie zur Ausübung einer damit verbundenen Aktuatorfunktion zur Verfügung zu stellen ist. Mit anderen Worten wird die elastische Rückverformung der Aktuatorvorrichtung somit nicht nur zum Wiedererreichen der Ausgangslage der Aktuatorvorrichtung an sich genutzt, sondern die Rückverformung dient zur Bereitstellung von Kraft und oder Energie, um daran angeschlossene oder verbundene Wirkeinrichtungen zu betätigen.

Die maximale Bewegungsenergie wird über die vollständige Aufhebung der Druckbeaufschlagung abgegeben. Es kann aber beispielsweise auch vorgesehen werden, die Druckbeaufschlagung schrittweise aufzuheben, um jeweils vorbestimmte Bewegungsenergiemengen freizusetzen.

In einer Ausführungsform kann die Bewegungsenergie an mechanisch gekoppelte Komponenten weitergegeben werden, die sich in Abhängigkeit der Kopplung translatorisch und/oder rotatorisch gemäß der Aktuatorbewegung aufgrund der freigewordenen Bewegungsenergie mitbewegen. Die mechanische Kopplung kann bedarfsweise Über- oder Untersetzungen und/oder Kupplungselemente enthalten.

Alternativ oder ergänzend kann die gespeicherte Energie auch dazu genutzt werden, durch die Bewegung der Aktuatorvorrichtung bei freiwerdender Bewegungsenergie und somit Änderung des Hohlraumvolumens, einen Fluidtransfer zur Druckbeaufschlagung fluidisch angetriebener und fluidisch mit dem Hohlraum verbundener Komponenten vorzusehen. Die Bewegungsenergie der Aktuatorvorrichtung kann somit in eine Strömungsenergie des im Hohlraum befindlichen Fluids umgewandelt werden. Die fluidische Kopplung kann zur Druckbeaufschlagung mit positivem und/oder negativem Druck ausgebildet sein. Beispielsweise kann die Aktuatorvorrichtung über eine erste Druckbeaufschlagung gelängt werden. Die Aktuatorvorrichtung wandelt somit durch den Druck und den Zustrom an Volumen entsprechend der vorbestimmten Elastizität die Energie in Formänderungsarbeit in der Mantelfläche, die dort im gestreckten oder gelängten Zustand in Form von Vorspannung gespeichert ist. Wird die Druckbeaufschlagung aufgehoben, bewegt sich die Aktuatorvorrichtung wieder in Richtung ihrer Ausgangsabmessung. Das im Hohlraum befindliche Fluid wird dabei über eine Fluidverbindung einer fluidisch angetriebenen Komponente zur Verfügung gestellt. Die gespeicherte Energie kann also im Fall der Druckabsenkung in Form des ausströmenden Volumens wieder als Strömungsenergie nutzbar gemacht werden.

Wie bereits angeführt, kann die Aufhebung der Druckbeaufschlagung in Abhängigkeit der durch die Komponente auszuführenden Aktuatorfunktion erfolgen. Mit anderen Worten kann die Bereitstellung der Bewegungsenergie zur Ausübung einer Aktuatorfunktion bedarfsgerecht gesteuert werden. Entsprechend kann die Aktuatorvorrichtung auch eine hierzu angepasste Steuerungsvorrichtung oder Signaleingänge für eine externe Steuerungsvorrichtung umfassen.

Gemäß einer Ausgestaltung weist die Aktuatorvorrichtung zumindest ein Begrenzungselement auf, das dazu konfiguriert ist, die Längung und/oder Stauchung der Aktuatorvorrichtung zu begrenzen.

Das Begrenzungselement kann dabei einstückig ausgeführt sein oder auch mehrere Komponenten umfassen. Durch die Begrenzung der Längung und/oder Stauchung der Aktuatorvorrichtung kann beispielsweise eine Verformung vermieden werden, die aufgrund plastischer Verformungsanteile ein irreversible Verformung oder auch eine Schädigung der Aktuatorvorrichtung bedingen kann. Es ist aber auch möglich, über das Begrenzungselement eine Mindestlänge und/oder Maximallänge der Aktuatorvorrichtung vorzugeben. Entsprechend kann die Aktuatorvorrichtung auch in axialer Richtung in Bezug auf die Längsachse vorgespannt werden. Dies kann beispielsweise dazu genutzt werden, ein erhöhtes positives oder negatives Druckniveau, das erforderlich ist, um die Aktuatorvorrichtung weiter gegenüber ihrer vorgespannten Länge zu längen oder zu stauchen, und/oder vorzusehende Ausgangsabmessungen bedarfsgerecht einzustellen

In einer vorteilhaften Ausführungsform der Erfindung weist die Mantelfläche einen entlang der Längsachse der Mantelfläche zumindest abschnittsweise als Wellrohrfeder ausgebildet ist, damit eine Längung oder Stauchung ermöglicht werden kann. Die Mantelfläche weist in diesen Abschnitten somit wellenförmig wechselnde Durchmesser, also einen wellen- bzw. faltenbalgartigen Querschnitt, auf. Durch eine derartige Geometrie kann mit der entsprechenden Auswahl eines passenden Werkstoffes die notwendige Elastizität der Mantelfläche erzielt werden. Insbesondere kann somit ein starres Material durch die Wellung eine ausreichende Elastizität aufweisen, um die für die jeweilige Aktuatorfunktion erforderliche Energie speichern und wieder abgeben zu können.

In einer Ausgestaltung ist das Begrenzungselement positionsfest in der stirnseitigen Begrenzung oder der Grundplatte haltbar und in Richtung der Längsachse relativ zur gegenüberliegenden Grundplatte bzw. stirnseitigen Begrenzung über einen zumindest in einer Bewegungsrichtung vorbestimmten Bewegungsweg bewegbar.

Der vorbestimmte Bewegungsweg korrespondiert dabei zur maximalen Längung und/oder Stauchung der Aktuatorvorrichtung. Der Aktuatorhub kann somit über den vorbestimmten Bewegungsweg des Begrenzungselements in einfacher Weise eingestellt werden.

Insbesondere ist das Begrenzungselement als Anschlagelement mit einer Anschlagfläche, durch die eine Stauchung der Aktuatorvorrichtung in Zusammenwirken mit einem Gegenanschlag begrenzt wird, ausgebildet oder weist dieses auf.

Das Anschlagelement wird hierzu beispielsweise positionsfest in der stirnseitigen Begrenzung gehalten und erstreckt sich entlang der Längsachse der Aktuatorvorrichtung in Richtung der Grundplatte. Als Anschlagfläche kann eine der Grundplatte zugewandte Stirnseite des Anschlagelements dienen. Alternativ kann das Anschlagelement aber auch einen zwischen der Stirnseite und der positionsfesten Halterung angeordneten Absatz zur Ausbildung einer Anschlagfläche aufweisen. Wird die Aktuatorvorrichtung nun durch einen negativen Druck gestaucht oder aufgrund einer Druckreduzierung aus einer gelängten Position durch die durch die Elastizität der Mantelfläche bedingten Rückstellkräfte wieder in eine Ausgangsposition bewegt, wird diese Bewegung gestoppt, wenn die Anschlagfläche den Gegenanschlag erreicht. Das Anschlagelement kann somit eine über eine elastische Stauchung hinausgehende Verformung der Mantelfläche verhindern. Wie vorstehend bereits adressiert, kann über das Anschlagelement aber auch die Mantelfläche alternativ oder ergänzend in eine vorgespannte Lage gebracht werden, wenn die Länge des Anschlagelements zwischen ihrer positionsfesten Halterung und der Anschlagfläche die Mantelfläche über ihre Ausgangsabmessung ohne elastische Verformung hinaus längt.

Gemäß einer Weiterbildung wird der Gegenanschlag bei positionsfester Halterung des Anschlagelements in der stirnseitigen Begrenzung durch die Grundplatte oder bei positionsfester Halterung des Anschlagelements in der Grundplatte durch die stirnseitige Begrenzung gebildet.

Demnach erfordert eine solche Ausbildung des Gegenanschlags über die Grundplatte oder stirnseitige Begrenzung keine weiteren Komponenten.

In einer Ausgestaltung ist die Position, in der das Anschlagselement positionsfest haltbar ist, und/oder die Position der Anschlagfläche einstellbar.

Durch die Einstellbarkeit der Position des Anschlagelements und somit der Länge der Erstreckung von der positionsfesten Halterung bis zur Anschlagfläche kann somit auch die minimale Erstreckung der Aktuatorvorrichtung und/oder deren Vorspannung in Richtung der Längsachse eingestellt werden. In vergleichbarer Weise kann die Länge der Erstreckung von der positionsfesten Halterung bis zur Anschlagfläche auch über eine Änderung der Position der Anschlagfläche verändert werden. Hierzu kann zum Beispiel die Anschlagfläche aus einer Überwurfmutter gebildet werden, die in verschiedene Höhenpositionen entlang des zumindest abschnittsweise als Gewindestange ausgebildeten Anschlagelements geschraubt werden kann.

In einer Weiterbildung weist das Anschlagelement zumindest einen Anschlagelementgewindeabschnitt auf, der in einen Gewindeabschnitt der stirnseitigen Begrenzung oder der Grundplatte eingreift.

Die den Gewindeabschnitt aufweisende stirnseitige Begrenzung oder Grundplatte dient dabei der positionsfesten Halterung des Anschlagelements und kann beispielsweise als Innengewindeabschnitt ausgebildet sein. Das Anschlagelement weist in einem solchen Fall einen zum Innengewindeabschnitt korrespondierenden Anschlagelementaußengewindeabschnitt auf. Hierüber ist das Anschlagelement in den Innengewindeabschnitt der stirnseitige Begrenzung bzw. der Grundplatte einschraubbar. Über die Einschraubtiefe, ggf. in Verbindung mit einem Sicherungselement, kann zudem die Position, in der das Anschlagelement positionsfest gehalten wird, eingestellt werden. Das Prinzip der Einstellbarkeit ist analog auf einen Außengewindeabschnitt der stirnseitigen Begrenzung bzw. der Grundplatte und einen Anschlagelementinnengewindeabschnitt des Anschlagelements übertragbar. Der Anschlagelementgewindeabschnitt kann hinsichtlich seiner Funktionalität auch als Einstellgewinde bezeichnet werden.

Insbesondere ist das Begrenzungselement als Zuganker mit einem Ankerabschnitt, durch den die Längung der Aktuatorvorrichtung in Zusammenwirken mit einem Ankeranschlag begrenzt wird, ausgebildet oder weist diesen auf.

Durch den Zuganker kann vergleichbar zum Anschlagelement, jedoch hier in Bezug auf eine umgekehrte Verformungsrichtung der Aktuatorvorrichtung, eine Bewegungsbegrenzung in Richtung der Längsachse der Aktuatorvorrichtung vorgesehen werden. Beispielsweise kann über den Zuganker eine Längung bei positiver Druckbeaufschlagung nur erfolgen, bis der Ankerabschnitt den Ankeranschlag erreicht. Neben einer Begrenzung einer Längung der Aktuatorvorrichtung bei positiver Druckbeaufschlagung kann die Aktuatorvorrichtung über den Zuganker aber auch für Anwendungen mit negativer Druckbeaufschlagung vorgespannt werden. Die Vorspannposition der Aktuatorvorrichtung korrespondiert in diesem Fall zu einer Position des Ankerabschnitts am Ankeranschlag.

In einer Ausgestaltung weist die der positionsfesten Halterung gegenüberliegende Grundplatte bzw. stirnseitige Begrenzung eine Ankeraufnahme auf, in der der Ankerabschnitt durch den Ankeranschlag haltbar ist.

Auch hier sind vergleichbar zum Anschlagelement keine weiteren Komponenten erforderlich.

Gemäß einer Weiterbildung ist die Position, in der der Zuganker positionsfest haltbar ist, und/oder die Position des Ankerabschnitts einstellbar.

Somit kann die maximale Längung der Aktuatorvorrichtung oder die Vorspannung für eine negative Druckbeaufschlagung gemäß einer durch den Zuganker bedingten initialen Stauchung bedarfsgerecht angepasst werden. Die maximale Längung oder initiale Stauchung kann auch an vorgegebene Einbauverhältnisse anpassbar sein.

Insbesondere wird der Zuganker durch das vorstehend beschriebene Anschlagelement in Richtung der Längsachse hindurchgeführt.

Das Begrenzungselement weist somit sowohl den Zuganker als auch das Anschlagelement auf. Das Anschlagelement wird dabei als Anschlagrohr ausgebildet, durch das der Zuganker hindurchgeführt wird. Das Begrenzungselement kann somit sowohl eine Längung als auch Stauchung der Aktuatorvorrichtung in kompakter Bauweise begrenzen und/oder die Aktuatorvorrichtung bedarfsgerecht vorspannen.

Gemäß einer Ausgestaltung weist der Zuganker zumindest einen Zugankergewindeabschnitt auf, der in einen Gewindeabschnitt des vorstehenden Anschlagelements, der stirnseitigen Begrenzung oder der Grundplatte eingreift.

Somit kann auch hier die maximale Längung der Aktuatorvorrichtung oder deren Vorspannung über den Zugankergewindeabschnitt einstellbar sein. Der Zugankergewindeabschnitt wirkt hierzu mit einem Gewindeabschnitt des zur positionsfesten Halterung vorgesehenen Elements, wie dem Anschlagelement, der stirnseitigen Begrenzung oder der Grundplatte zusammen. Sofern der Zuganker zusammen mit einem Anschlagelement vorgesehen ist und dieses durchläuft, kann die Position des Zugankers auch mit der Position des Anschlagelements angepasst werden. Insbesondere ist die Position des Zugankers aber auch unabhängig hiervon veränderbar. Die Verstellbarkeit der Position des Zugankers über das Anschlagelement und den Zuganker selbst kann den Verstellbereich erweitern.

In einer vorteilhaften Ausführungsform erstreckt sich das Begrenzungselement in Richtung der Längsachse durch den Hohlraum.

Die Durchführung des Begrenzungselements durch den Hohlraum ermöglicht einerseits eine kompakte Bauweise. Andererseits kann das Begrenzungselement durch die Mantelfläche vor äußeren Einflüssen geschützt werden.

In einem Aspekt ist die Erfindung auch auf ein Aktuatorsystem mit einer vorstehend beschriebenen Aktuatorvorrichtung gerichtet, wobei dem Aktuatorsystem durch Aufhebung der druckbedingten Längung oder Stauchung der Aktuatorvorrichtung Energie zur Ausübung einer Aktuatorfunktion zuführbar ist.

Die Aufhebung der druckbedingten Längung oder Stauchung kann vollständig oder teilweise erfolgen. Mit anderen Worten kann bei vollständiger Aufhebung der Längung oder Stauchung der hierdurch maximal gespeicherte Energiebetrag zur Ausübung der Aktuatorfunktion oder eben bei teilweiser Aufhebung nur ein anteiliger Energiebetrag zur Verfügung gestellt werden. Das Aktuatorsystem basiert somit auf einer Aktuatorvorrichtung als Energiespeicher. Die zur Speicherung der Energie genutzte vorhergehende Längung oder Stauchung der Aktuatorvorrichtung kann gleichzeitig auch zur Ausübung von Sekundäraktuatorfunktionen genutzt werden. Die Sekundäraktuatorfunktion kann direkt mit der Aktuatorfunktion bei Aufhebung der Längung oder Stauchung in Verbindung stehen, wie dies nachfolgend exemplarisch für den Fall eines Bremssystems erläutert wird, oder hiervon unabhängig sein.

In einer Ausgestaltung ist das Aktuatorsystem dazu konfiguriert, in einem Bremssystem eingesetzt zu werden, und durch die Ausübung der Aktuatorfunktion eine Bremskraft ausüben zu können.

Das Aktuatorsystem für das Bremssystem ist beispielsweise so ausgebildet, dass die Aktuatorvorrichtung mit ihrer stirnseitigen Begrenzung mit einem Bremsbelag verbunden ist oder die stirnseitige Begrenzung diesen ausbildet. In einem Zustand, in dem die Aktuatorvorrichtung nicht mit einem Druck beaufschlagt wird, wird der Bremsbelag durch die Aktuatorvorrichtung gegen eine Bremsscheibe gedrückt. Wird nun dem Hohlraum der Aktuatorvorrichtung ein positiver Druck zugeführt, der ein Längung der Mantelfläche und somit der Aktuatorvorrichtung in Richtung der Längsachse bewirkt, kann hierüber der Bremsbelag in eine von der Bremsscheibe beabstandete Position überführt werden. Die Bremse wird demnach durch die Aktuatorbewegung gelöst. Wird die Druckbeaufschlagung in Folge zumindest wieder soweit aufgehoben, dass die Aktuatorvorrichtung den Bremsbelag in eine Position zurückführt, in der der Bremsbelag zur Bremsung der Bremsscheibe an diese angedrückt wird, übt die Aktuatorvorrichtung ihre Funktion des Bremsens aus. Hier stehen die Funktionen des Bremsens und des Lösens der Bremse in direkter gegenseitiger Beziehung. Die eigentliche Aktuatorfunktion ist das Bremsen, während die Sekundäraktuatorfunktion hier im Lösen der Bremse besteht. Das Aktuatorsystem wirkt hier im Bremssystem als Passivbremse.

Im Folgenden werden weitere exemplarische Ausführungsformen und Varianten angegeben, die in der vorstehend beschriebenen Aktuatorvorrichtung Anwendung finden können.

In einer vorteilhaften Ausführungsform hat die Mantelfläche eine im Querschnitt senkrecht zur Längsrichtung des Hohlraums im Wesentlichen runde Form. Durch die um die Längsachse runde Form, kann im Falle eines Druckunterschiedes zwischen dem Hohlraum und einem die Vorrichtung umgebenden Fluid eine ausgeglichene Druckverteilung auf die Mantelfläche erreicht werden, was sich ebenfalls positiv auf den Verschleiß des Bauteils auswirkt.

In einer weiteren vorteilhaften Ausführungsform der Erfindung erstrecken sich die Mantelfläche und damit der von ihr begrenzte Hohlraum im Wesentlichen symmetrisch um die Längsachse der Mantelfläche. Auf diese Weise kann eine gleichmäßige Belastung der Mantelfläche erzielt werden, wodurch wiederum vorteilhafte Effekte hinsichtlich des Verschleißes der Vorrichtung erzielt werden können.

In einer vorteilhaften Ausführungsform der Erfindung ist der Hohlraum zwischen mindestens zwei ineinander angeordneten Mantelflächen gebildet. Insbesondere eine koaxiale Anordnung der ineinander angeordneten Mantelflächen ist anzustreben, um eine gleichmäßige Druckverteilung zu gewährleisten.

In einer weiteren vorteilhaften Ausführungsform der Erfindung ist die Vorrichtung derart konfiguriert, dass sich die Abmessung der Vorrichtung in Längsrichtung verringert oder vergrößert, wenn, insbesondere auf die stirnseitige Begrenzung, ein Druck von außerhalb des Hohlraums beaufschlagt wird. Auf diese Weise kann eine Bewegung der Vorrichtung entlang der Längsachse in Abhängigkeit eines Drucks gesteuert werden.

Wird die Vorrichtung als Bremsaktuator in einem oben beschriebenen Bremssystem eingesetzt, kann die durch den Bremsdruck indizierte Bewegung dazu verwendet werden den Bremsbelag der Scheibenbremse an die entsprechende Bremsscheibe anzulegen.

In einer weiteren vorteilhaften Ausführungsform der Erfindung steht die stirnseitige Begrenzung senkrecht auf der Längsachse des Hohlraumes. In einer derartigen Anordnung wirkt eine auf die Stirnseitigen Begrenzung einwirkende Energie zur Betätigung der Vorrichtung also in Richtung der Längsachse des Hohlraums und damit der Bewegungsrichtung der Vorrichtung. Auf diese Weise kann eine besonders effiziente Ausführungsform der Erfindung erzielt werden.

Weiterhin vorteilhaft ist eine Ausführungsform der Erfindung in der die stirnseitige Begrenzung und die Mantelfläche des Hohlraums einstückig ausgeführt sind. Auf diese Weise lässt sich eine einfache Bauart der Vorrichtung realisieren. Weiterhin können Dichtungen, die in anderen Ausführungsformen, in denen die stirnseitige Begrenzung und die Mantelfläche nicht in einem Bauteil ausgeführt sind, notwendig sind und damit die Verwendung von Verschleißteilen vermieden werden.

In einer vorteilhaften Ausführungsform der Erfindung ist die Vorrichtung dazu konfiguriert als Aktuator in einem Bremssystem eingesetzt zu werden.

Im Folgenden wird die Erfindung anhand verschiedener Ausführungsbeispiele, welche in den beigefügten Zeichnungen dargestellt sind, näher erläutert. Die Zeichnungen zeigen im Einzelnen:
- **Figur 1**: zeigt eine Prinzipskizze einer Querschnittsansicht einer Aktuatorvorrichtung entlang ihrer Längsachse gemäß einer ersten Ausführungsform der Erfindung
- **Figur 2**: zeigt eine Querschnittsansicht einer Aktuatorvorrichtung entlang ihrer Längsachse gemäß einer zweiten Ausführungsform der Erfindung
- **Figur 3**: zeigt ein exemplarisches Aktuatorsystem als ein erstes Anwendungsbeispiel der Erfindung als Bremsaktuator in einer hydraulisch betätigten Scheibenbremse (Aktivbremse) mit angelegten Bremsbelägen
- **Figur 4**: zeigt die Ausführungsform einer Scheibenbremse mit einem erfindungsgemäßen Aktuatorsystem für einen Bremsaktuator gemäß Figur 3 mit gelösten Bremsbelägen
- **Figur 5**: zeigt ein weiteres Anwendungsbeispiel des Aktuatorsystems der Erfindung als Bremsaktuator in einer anderen Ausführungsform einer hydraulisch betätigten Scheibenbremse (Aktivbremse)
- **Figur 6**: zeigt ein weiteres Anwendungsbeispiel des Aktuatorsystems der Erfindung als Bremsaktuator in einer Ausführungsform einer hydraulisch betätigten Parkbremse (Passivbremse)
- **Figur 7**: zeigt ein weiteres Anwendungsbeispiel des Aktuatorsystems der Erfindung als Bremsaktuator in einer weiteren Ausführungsform einer hydraulisch betätigten Parkbremse (Passivbremse)
- **Figur 8**: zeigt ein weiteres Anwendungsbeispiel des Aktuatorsystems für eine hydraulisch betätigte Parkbremse (Passivbremse) mit einer Ausführungsform zweier erfindungsgemäßer Aktuatorvorrichtungen als Bremsaktuatoren
- **Figur 9**: zeigt eine Prinzipskizze eines weiteren Anwendungsbeispiels des Aktuatorsystems für eine hydraulisch betätigten Parkbremse (Passivbremse) mit drei erfindungsgemäßen Aktuatorvorrichtungen als Bremsaktuatoren
- **Figur 10**: zeigt ein weiteres Anwendungsbeispiel des Aktuatorsystems der Erfindung in einer weiteren Ausführungsform einer hydraulisch betätigten Scheibenbremse (Aktivbremse) mit einer Bremszange
- **Figur 11**: zeigt ein weiteres Anwendungsbeispiel des Aktuatorsystems mit einer erfindungsgemäßen Aktuatorvorrichtung in einer weiteren Ausführungsform einer hydraulisch betätigten Scheibenbremse (Passivbremse) mit einer Bremszange

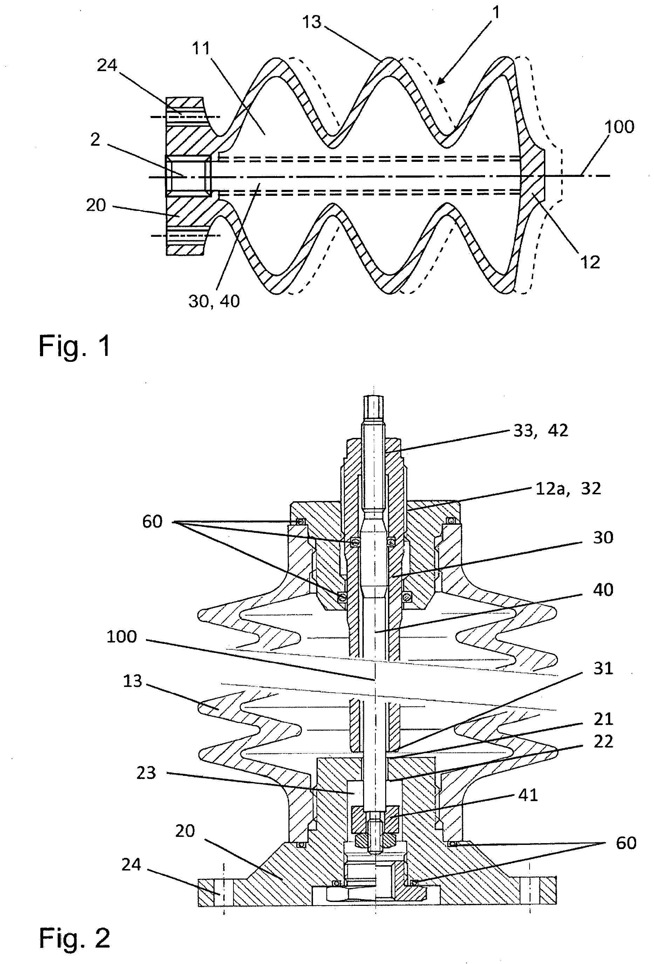

**Figur 1** zeigt eine Prinzipskizze einer Querschnittsansicht einer Aktuatorvorrichtung entlang ihrer Längsachse 100 gemäß einer ersten Ausführungsform der Erfindung. Die Aktuatorvorrichtung weist eine Mantelfläche 13 auf, die sich um die Längsachse 100 erstreckt und zusammen mit einer stirnseitigen Begrenzung 12 und einer Grundplatte 20 einen Hohlraum 11 bildet. Die Mantelfläche 13 wird hier über eine Wellrohrfeder 1 gebildet, die zugleich die stirnseitige Begrenzung 12 und die Grundplatte 20 ausbildet. Die Wellrohrfeder 1 kann aber auch nur zumindest abschnittsweise die Mantelfläche 13 ausbilden, während die stirnseitige Begrenzung 12 und/oder die Grundplatte 20 als separate Bauteile mit der Mantelfläche 13 fluiddicht verbindbar sind. Die Grundplatte 20 weist hier beispielhaft zwei Befestigungsaufnahmen 24 als Befestigungsmittel auf, über die Schrauben zur Befestigung an einem anderen Bauteil hindurchgeführt werden können. Sowohl die Anzahl der Befestigungsmittel als auch ihre Ausgestaltung ist bedarfsgerecht anpassbar.

Der Hohlraum 11 ist über eine Fluidzuleitung, beispielsweise den hier gezeigten Hydraulikanschluss 2, mit einem positiven Druck zur Längung der Aktuatorvorrichtung bzw. der Mantelfläche 13 oder mit einem negativen Druck zur Stauchung der Aktuatorvorrichtung bzw. der Mantelfläche 13 in Richtung der Längsachse 100 gegenüber einer Ausgangsabmessung beaufschlagbar. Die Ausgangsabmessung ist eine Länge der Aktuatorvorrichtung ohne elastische Verformungsanteile bei einer nicht vorgespannten Aktuatorvorrichtung in Richtung der Längsachse 100 oder eine Länge in einem vorgespannten Zustand ohne zur weiteren Längung oder Stauchung vorgesehene Druckbeaufschlagung. Die Ausgangsabmessung der Aktuatorvorrichtung ist hier als durchgezogene Linie dargestellt, während eine Längung durch eine positive Druckbeaufschlagung gestrichelt eingezeichnet ist. Der Hohlraum muss aber nicht, wie in Figur 1 gezeigt, über einen in der Grundplatte 20 vorgesehenen Hydraulikanschluss 2 mit einem Druck beaufschlagt werden, sondern dies kann auch über eine Fluidzuleitung in der stirnseitige Begrenzung 12 oder in anderen mit dem Hohlraum 11 in Verbindung stehender Komponenten, wie der Mantelfläche oder dem im Folgenden noch beschriebenen Begrenzungselement, erfolgen.

Ebenfalls gestrichelt eingezeichnet ist ein Begrenzungselement, das als Anschlagelement 30 und/oder Zuganker 40 ausführbar ist, wie dies noch unter Bezugnahme auf Figur 2 exemplarisch beschrieben wird. Das Begrenzungselement wird hier in der stirnseitigen Begrenzung 12 positionsfest gehalten und erstreckt sich entlang der Längsachse 100 durch den Hohlraum 11 in Richtung der Grundplatte 20. Wird der Druck im Hohlraum 11 erhöht, so dass die Aktuatorvorrichtung in Folge der Längung der Mantelfläche gleichermaßen gelängt wird, wird das Begrenzungselement über die stirnseitige Begrenzung 12 relativ zur Grundplatte 20 bewegt. Die Ausbildung des Begrenzungselements als Anschlagelement 30 begrenzt dabei eine minimale Länge der Mantelfläche 13. Hierzu kann das Anschlagelement 30 eine wie später noch beschriebene Anschlagfläche 31 (Figur 2) aufweisen, die bei vorgegebener minimaler Länge der Mantelfläche 13 in Richtung der Längsachse 100 mit einem Gegenanschlag 21 (Figur 2) zusammenwirkt. Das Anschlagelement kann zur Stauchungsbegrenzung eingesetzt werden, um eine plastische Verformung in Richtung der Längsachse 100 oder anderweitige Überlastung oder Schädigung der Mantelfläche zu verhindern. Alternativ oder ergänzend kann über das Anschlagelement eine Vorspannung in die Mantelfläche eingebracht werden, indem die Länge der Erstreckung des Anschlagelements 30 zwischen der positionsfesten Halterung und der Anschlagfläche 31 derart eingestellt wird, dass die Mantelfläche 13 unabhängig von einer Druckbeaufschlagung aus einem entspannten Zustand, also in einem Zustand ohne äußere Krafteinwirkung, bereits gelängt wird. Hierüber ist der zur weiteren Längung der Aktuatorvorrichtung erforderliche Druck einstellbar.

In ähnlicher Weise kann das Begrenzungselement auch als Zuganker 40 ausgestaltet sein, der eine maximale Länge der Aktuatorvorrichtung bzw. eine maximale Dehnung der Mantelfläche 13 begrenzt. Hierzu weist der Zuganker 40 einen Ankerabschnitt 41 (Figur 2) auf, der mit einem Ankeranschlag 22 (Figur 2) zusammenwirkt, so dass die Bewegung des Zugankers 40 in eine Richtung entlang der Längsachse 100 mit zunehmendem Abstand zwischen der stirnseitigen Begrenzung 12 und der Grundplatte 20 begrenzt wird. Mit anderen Worten kann hierüber der maximale Abstand zwischen der stirnseitigen Begrenzung 12 und der Grundplatte 20 vorgegeben werden. Der Zuganker 40 kann somit zum Schutz vor einer plastischen Verformung oder anderweitigen Überlastung durch übermäßige Längung der Mantelfläche 13 Anwendung finden. Alternativ kann hierüber auch eine Vorspannung der Mantelfläche 13 vorgesehen werden, wenn diese mittels negativer Druckbeaufschlagung gestaucht werden soll.

Grundsätzlich sind die Ausführungen zu einer Konstellation, in der das Befestigungselement in der stirnseitigen Begrenzung 12 positionsfest gehalten und gegenüber der Grundplatte 20 relativ bewegt wird, analog auf eine umgekehrte Konstellation anwendbar. Die umgekehrte Konstellation wäre eine positionsfeste Halterung des Begrenzungselements in der Grundplatte 20 bei relativer Bewegung gegenüber der stirnseitigen Begrenzung 12. Auch eine Kombination hierzu in der Beschreibung angeführter Merkmale ist auf eine solche umgekehrte Konstellation übertragbar, sofern nicht mit der stirnseitigen Begrenzung 12 oder mit der Grundplatte 20 verbundene spezifische Merkmale dies vernünftigerweise ausschließen.

**Figur 2** zeigt eine Querschnittsansicht einer Aktuatorvorrichtung entlang ihrer Längsachse 100 gemäß einer zweiten Ausführungsform der Erfindung. Die zweite Ausführungsform unterscheidet sich im Wesentlichen dadurch von der ersten Ausführungsform, dass die stirnseitige Begrenzung 12 sowie die Grundplatte 20 hier nicht integral mit der Mantelfläche 13 ausgebildet sind. Die die Mantelfläche 13 ausbildende Wellrohrfeder 1 ist somit mit stirnseitigen Begrenzung 12 und der Grundplatte 20 verbindbar. Dies erhöht die Modularität der Aktuatorvorrichtung. Insbesondere können die jeweiligen Verbindungen lösbar, beispielsweise als Schraubverbindungen, ausgestaltet sein, so dass die stirnseitige Begrenzung 12 und/oder die Grundplatte 20 austauschbar sind. Im Gegensatz dazu kann eine integrale Ausbildung der Mantelfläche 13 mit der stirnseitigen Begrenzung 12 und/oder der Grundplatte den Aufwand für vorzusehenden Dichtungsmaßnahmen reduzieren.

Zudem zeigt Figur 2 weitere Einzelheiten einer exemplarischen Ausgestaltung des Begrenzungselements und hiermit zusammenwirkender Gestaltungsmerkmale der Aktuatorvorrichtung. Die Aktuatorvorrichtung, hier ein fluidbetätigter Energiespeicher in Wellbalgform mit einstellbarer Vorspannung und einstellbarem Endanschlag, weist zur einstellbaren Vorspannung ein Anschlagelement 30 in Form eines Anschlagrohrs sowie zum einstellbaren Endanschlag einen Zuganker 40 auf.

Mit dem Anschlagrohr als Anschlagelement 30 lässt sich über einen Anschlagelementgewindeabschnitt 32 mit Außengewinde als Einstellgewinde die Mantelfläche 13 mechanisch dehnen bzw. axial längen. Das Einstellgewinde für das Anschlagrohr befindet sich an einem der stirnseitigen Begrenzung 12 zugewandten Endabschnitt des Anschlagrohrs. Der hierzu korrespondierende Gewindeabschnitt 12a der stirnseitigen Begrenzung 12 ermöglicht die einstellbare positionsfeste Halterung des Anschlagelements 30 in der stirnseitigen Begrenzung 12. Die stirnseitige Begrenzung 12 kann sich dabei in Abhängigkeit der Druckbeaufschlagung in Richtung der Längsachse relativ zur Grundplatte 20 bewegen. Demnach verändert sich mit entsprechender Relativbewegung der Abstand zwischen der stirnseitigen Begrenzung 12 und der Grundplatte 20. Durch das einstellbare Anschlagrohr als Anschlagelement 30 kann dabei der Mindestabstand zwischen der stirnseitigen Begrenzung 12 und der Grundplatte 20 und somit die minimale Länge der Aktuatorvorrichtung in Richtung der Längsachse 100 festgelegt und angepasst werden. Hierzu weist das Anschlagrohr an einem der positionsfesten Halterung abgewandten Ende eine der Grundplatte zugewandte Stirnfläche auf, die eine Anschlagfläche 31 bildet. Im vorgegebenen Mindestabstand zwischen der stirnseitigen Begrenzung 12 und der Grundplatte 20 liegt die Anschlagfläche 31 an einem durch die Grundplatte 20 gebildeten Gegenanschlag 21 an. Ein weitere Verkleinerung des Abstands zwischen der stirnseitigen Begrenzung 12 und der Grundplatte 20 in Richtung der Längsachse 100 wird durch dieses Anliegen der Anschlagfläche 31 am Gegenanschlag 21 verhindert. Mit dem Anschlagrohr kann die Mantelfläche 13 bzw. die Aktuatorvorrichtung in eine axial vorgespannte Lage gebracht werden. Diese Vorspannung bewirkt ein erhöhtes Druckniveau, das erforderlich ist um die Mantelfläche weiter - gegenüber seiner bereits mechanisch vorgestreckten Position - zu längen, womit sich das Anschlagrohr von der Aufstandsfläche abheben würden.

Zur Abdichtung des Hohlraums 11 weist die Aktuatorvorrichtung mehrere Dichtungen 60 auf. Eine der Dichtungen 60 befindet sich beispielsweise in einer Nut der stirnseitigen Begrenzung 12. Diese wirkt so auf den Außendurchmesser des Anschlagrohres, dass das Fluid aus dem Inneren des Hohlraums 11 nicht über die stirnseitige Begrenzung 12 entweichen kann.

Das Begrenzungselement gemäß Figur 2 weist neben dem als Anschlagrohr ausgebildeten Anschlagelement 30 auch einen durch das Anschlagrohr in axialer Richtung der Längsachse 100 geführten Zuganker 40 auf. Der Zuganker kann hier positionsfest in der stirnseitigen Begrenzung 12 gehalten und in axialer Richtung entlang der Längsachse 100 relativ zur Grundplatte 20 bewegt werden.

Mit dem Zuganker 40 lässt sich über einen Zugankergewindeabschnitt 42 mit einem Außengewinde als Einstellgewinde in Zusammenwirken mit einem Gewindeabschnitt 33 des Anschlagelements 30 mit korrespondierendem Innengewinde die Längung der Mantelfläche 13 und somit der Aktuatorvorrichtung begrenzen. Der Zuganker 40 kann demnach in Richtung der Längsachse über den Zugankergewindeabschnitt 42 relativ zum Anschlagrohr bewegt werden. An dem der Grundplatte 20 zugewandten, die Anschlagfläche 31 aufweisenden Ende des Anschlagrohrs erstreckt sich der Zuganker 40 weiter in Richtung der Grundplatte 20. Dieser Überstand in Richtung der Längsachse 100 ragt in eine hier durch die Grundplatte 20 gebildete Ankeraufnahme 23 hinein. Der Ankerabschnitt 41 ist innerhalb der Ankeraufnahme 23 angeordnet. Ein hier ebenfalls durch die Grundplatte 20 gebildeter Ankeranschlag 22 verhindert, dass der Ankerabschnitt 41 aus der Ankeraufnahme 23 hinausbewegt werden kann. Gemäß der dargestellten Ausführungsform weist die Grundplatte 20 zur Ausbildung des Ankeranschlags 22 eine Durchgangsöffnung auf, die vom Zuganker durchlaufen wird und in radialer Richtung in Bezug auf die Längsachse 100 einen kleineren Durchmesser als der Anschlagsabschnitt 41 aufweist. Auf einer dem Anschlagelement 30 abgewandten Seite des sich an die Durchgangsöffnung anschließenden Grundplattenabschnitts wird der Ankeranschlag 22 durch die Grundplatte 20 gebildet. Entsprechend begrenzt der Ankeranschlag 22 die Ankeraufnahme 23 in einer auf die stirnseitige Begrenzung 12 gerichtete Bewegungsrichtung entlang der Längsachse 100. Zur Einstellung der maximalen Längung der Mantelfläche 13 kann die axiale Position des Ankerabschnitts 41 entlang des Zugankers 40 in Richtung der Längsachse 100 ebenfalls einstellbar sein. Hierzu kann der Ankerabschnitt 41 ein Innengewinde aufweisen, über das der Ankerabschnitt 41 über ein korrespondierendes Außengewinde am Zuganker in verschiedene Positionen bewegbar ist. Eine ausgewählte Position des Ankerabschnitts kann dann beispielsweise über eine Kontermutter gesichert werden. Gemäß der vorstehenden Ausführung ergibt sich somit eine mögliche Längenänderung der Mantelfläche entsprechend eines maximalen Abstands der dem Ankerabschnitt 41 zugewandten Fläche des Ankeranschlags 22 und der dem Ankeranschlag 22 zugewandten Fläche des Ankerabschnitts 41. Der maximale Abstand wird dabei durch das Zusammenwirken der Anschlagfläche 31 mit dem Gegenschlag 21 für das Anschlagrohr begrenzt. Die mögliche maximale Längenänderung kann auch über den maximalen Abstand der Anschlagfläche 31 zum ihr zugewandten Gegenanschlag 21 ausgedrückt werden. Durch die axiale Positionierung des Zugankers 40 über die Gewindeverbindung in Relation zur Mantelfläche 13 sowie in Relation zu dem Anschlagelement 30 wird nochmals zusammengefasst die maximale Längung der Aktuatorvorrichtung begrenzt um z.B. eine Überdehnung oder plastische Verformung des Hüllkörpers zu vermeiden.

Zur weiteren Abdichtung des Hohlraums 11 weist auch das den Zuganker 40 aufnehmende Anschlagelement 40 eine Dichtung 60 auf. Eine Nut im Abschlagelement 30 nimmt eine Dichtung 60 auf, die gegen den Außendurchmesser des Zugankers 40 wirkt und somit das Medium im Inneren des Hohlraums 11 hält. Alternativ oder ergänzend kann aber auch eine Nut in dem Zuganker 40 eine Dichtung aufnehmen, die gegen den Innendurchmesser des Anschlagelements 30 wirkt und somit das Fluid im Inneren des Hohlraums 11 hält.

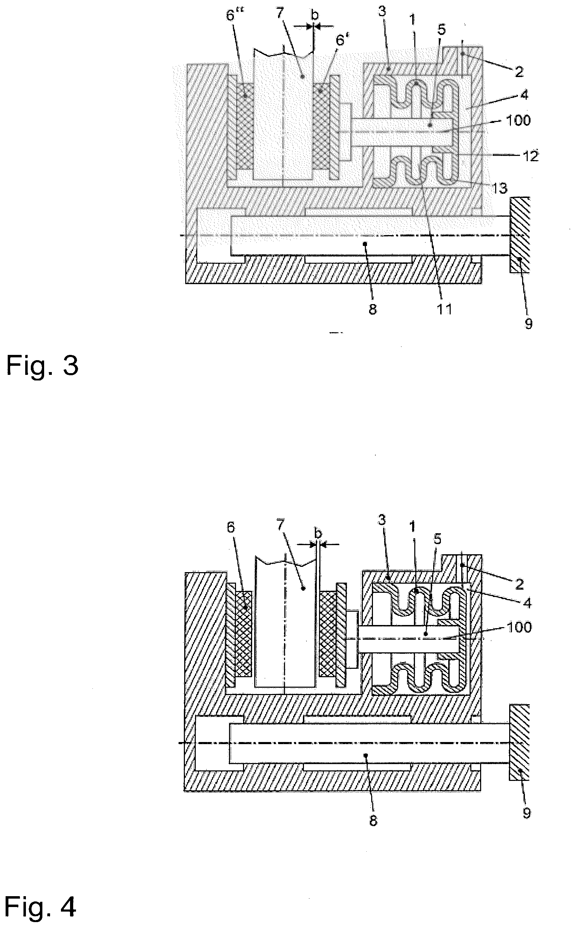

**Figur 3** zeigt ein exemplarisches Aktuatorsystem als ein erstes Anwendungsbeispiel in einer Ausführungsform der erfindungsgemäßen Vorrichtung als Bremsaktuator in einer hydraulisch betätigten Scheibenbremse. Das Begrenzungselement wird hier der besseren Übersichtlichkeit wegen nicht weiter gezeigt. Dies trifft auf die weiteren Figuren ebenfalls zu. Ungeachtet der anspruchsgemäßen Erfindung müssen in den Figuren dargestellte Funktionalitäten nicht durch ein Begrenzungselement bedingt sein, könne mit diesem zusammen jedoch in weiterer vorteilhafter Weise zusammenwirken. Die hier gezeigte Vorrichtung wird im Folgenden als Wellrohrfeder bezeichnet. Bei dem gezeigten Bremssystem handelt es sich um eine Sattelbremse eines Fahrzeugs. Diese weist eine Bremsscheibe 7 auf, die fest mit einem Rad des Fahrzeugs (nicht dargestellt) verbunden ist und deren Rotation und damit die Rotation des Rades durch das Anlegen zweier Bremsbeläge 6' und 6" gebremst werden soll. Das Belagfreispiel b zwischen der Bremsscheibe 7 und den beiden Bremsbelägen 6' und 6" ist in der in Figur 3 abgebildeten Stellung der Bremse gleich null. Die Bremsbeläge 6' und 6" liegen also an der Bremsscheibe 7 an.

Der Sattelrahmen 3 ist an einer Schwimmlagerung 8 derart gelagert, dass er axial auf der Schwimmlagerung 8 verschiebbar, aber nicht drehbar ist. Die Schwimmlagerung 8 ist anhand der Verbindung 9 mit dem Fahrzeug verbunden. Innerhalb des Sattelrahmens 3 ist eine Kammer 4 ausgebildet, die sich auf der einen Seite der Bremsscheibe 7 befindet. Im Inneren der Kammer 4 ist eine Wellrohrfeder 1 angeordnet. Innerhalb der Wellrohrfeder 1 wiederum befindet sich entlang einer Längsachse 100 der Wellrohrfeder ein Verschleißnachsteller 5, der aus der Kammer 4 des Sattelrahmens 3 hinausragt und mit einem Bremsbelag 6" in Verbindung steht. Der Verschleißnachsteller 5 ist dafür vorgesehen einen Verschleiß der Bremsbeläge 6' und 6", der durch die Reibung an der Bremsscheibe 7 entsteht, über Längenänderung auszugleichen und fungiert gleichzeitig als Bremskolben, der den in Zeichnungsebene rechten Bremsbelag 6' bewegt. Die Kammer 4 verfügt weiterhin über einen Hydraulikanschluss 2, über den ein Druck p in die Kammer 4 eingeleitet werden kann.

Die Wellrohrfeder 1 besteht aus einer stirnseitigen Begrenzung 12 und einer Mantelfläche 13, die einen Hohlraum 11 definieren und ist derart angeordnet, dass deren stirnseitige Begrenzung 12 in der Zeichnungsebene rechts in der Kammer 4 angeordnet ist und den Verschleißnachsteller 5 an dessen gegenüber vom rechten Bremsbelag 6' liegenden Ende in einer dafür vorgesehenen Einfassung aufnimmt. Die der stirnseitigen Begrenzung 12 gegenüberliegende Stirnseite der Wellrohrfeder ist offen und liegt an der linken Seite der Kammer 4 dichtend am Sattelrahmen 3 an und ist mit der Wand der Kammer 4 an dieser Stelle fest verbunden, sodass der durch die Mantelfläche 13 und der Stirnseitigen Begrenzung 12 gebildete Hohlraum 11 von der Kammer 4 isoliert ist. Die Wellrohrfeder ist aus einem Material gefertigt, sodass sie durch die Wellenform der Mantelfläche 13 eine vorbestimmte Elastizität in Längsrichtung aufweist.

Im dargestellten Zustand, wird die Kammer 4 über den Hydraulikanschluss 2 mit einem Druck p beaufschlagt, wodurch eine Kraft auf die stirnseitige Begrenzung 12 der Wellrohrfeder 1 in Zeichenebene nach links wirkt, die den rechten Bremsbelag 6' über den Verschleißnachsteller 5 bzw. den Bremskolben an die Bremsscheibe 7 drückt. Gleichzeitig wird durch den Druck p in der Kammer 4 eine Kraft auf den Sattelrahmen 3 in Zeichenebene nach rechts ausgeübt. Aufgrund der Schwimmlagerung 8 kann die Kraft an den linken Bremsbelag 6" übertragen werden, der somit gegen die Bremsscheibe 7 gedrückt wird. Wird der Druck p erhöht, somit erhöht sich auch die jeweilige Kraft die die Bremsbeläge 6' und 6" an die Bremsscheibe 7 drückt, wodurch eine stärkere Bremswirkung erzielt werden kann. Durch den beaufschlagten Druck p ist die Wellrohrfeder 1 in Figur 1 also vorgespannt.

**Figur 4** zeigt die Ausführungsform der Wellrohrfeder 1 in der gleichen Scheibenbremse wie in Figur 3. In Figur 4 ist dabei die Wellrohrfeder 1 nicht mit dem Druck p in der Kammer 4 beaufschlagt. Aufgrund einer Elastizität der Wellrohrfeder 1 in Richtung ihrer Längsachse dehnt sich durch den nicht vorhandenen Gegendruck in der Kammer 4 die Wellrohrfeder aus und betätigt dadurch den Verschleißnachsteller, wodurch die Bremsbeläge 6' und 6" von der Bremsscheibe 7 gelöst werden. Das Belagfreispiel b zwischen Bremsscheibe 7 und den Bremsbelägen 6' und 6" ist somit größer als 0 und somit wird keine Bremswirkung erzielt.

Wird die Kammer 4 und damit die stirnseitige Begrenzung 12 der Wellrohrfeder 1 erneut mit Druck beaufschlagt wird die Wellrohrfeder 1 zusammengedrückt und der Bremsbelag 6' wieder an die Bremsscheibe 7 angelegt, wie in Figur 1 dargestellt. Aufgrund der schwimmenden Lagerung des Sattelrahmens 3 an der Schwimmlagerung 8 wird durch das Anlegen des rechten Bremsbelags 6', der direkt durch die Wellrohrfeder 1 betätigt wird, ebenfalls eine Kraft erzeugt, die den linken Bremsbelag 6" auf der gegenüberliegenden Seite der Bremsscheibe 7 an die Bremsscheibe 7 anlegt.

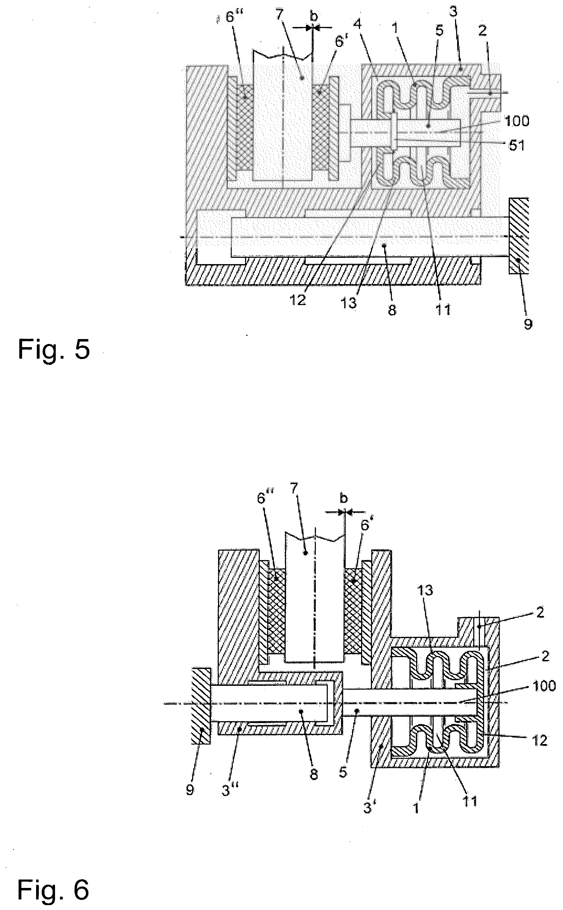

**Figur 5** zeigt eine weitere Ausführungsform der Wellrohrfeder 1 in der hydraulisch betätigten Scheibenbremse, die in den vorherigen Figuren gezeigt ist. Es wird daher darauf verzichtet auf die Ausführungsform der Scheibenbremse erneut detailliert einzugehen, die Ausführungen zu den Figuren 3 und 4 gelten entsprechend.

In dieser Ausführungsform des Bremsaktuators ist die Wellrohrfeder 1 um 180° gedreht in der Kammer 4 des Sattelrahmens 3 angeordnet. Dies bedeutet dass die stirnseitige Begrenzung der Wellrohrfeder 1 sich in dieser Ausführungsform in Zeichenebene auf der linken Seite befindet, und die entgegengesetzte offene Stirnseite der Wellrohrfeder 1 dichtend und unbeweglich an der rechten Wand der Kammer 4 angeordnet ist. Des Weiteren befindet sich der Hydraulikanschluss 2 an einer Stelle in der Kammer 4, sodass ein Druck in den Hohlraum 11 der Wellrohrfeder 1 geleitet wird. Zudem weist die stirnseitige Begrenzung 12 eine Öffnung auf, durch die der Verschleißnachsteller 5 in den Hohlraum 11 der Wellrohrfeder 1 hineinragt. Die Kontaktfläche zwischen Verschleißnachsteller 5 und Wellrohrfeder 1 an der stirnseitigen Begrenzung 12 des Hohlraums 11 ist dabei derart ausgeführt, dass der Hohlraum 11 der Wellrohrfeder 1 von der sie umgebenden Kammer 4 isoliert ist.

Wird nun der Hohlraum 11 über den Hydraulikanschluss 2 mit Druck beaufschlagt längt sich die Wellrohrfeder 1 entlang ihrer Symmetrieachse, also die Längsachse 100 des Verschleißnachstellers 5, sodass der Verschleißnachsteller 5 in seiner Längsrichtung in Zeichenebene nach links verschoben wird, bis der rechte Bremsbelag 6' an der Bremsscheibe 7 anliegt, wie in Figur 5 dargestellt. Gleichzeitig wird analog zur Beschreibung in den Figuren 1 und 2 eine Kraft auf den Sattelrahmen 3 und damit auf die linke Bremsscheibe 6" ausgeübt, bis diese ebenfalls an der Bremsscheibe 7 anliegt. Die dabei erzeugte Reibkraft zwischen den Bremsbelägen 6', 6" und der Bremsscheibe 7 kann somit über den Druck p im Hohlraum 11 der Wellrohrfeder 1 eingestellt werden. Wird der Druck p im Hohlraum 11 der Wellrohrfeder 1 wieder reduziert, verschiebt sich die stirnseitige Begrenzung 12 der Wellrohrfeder 1 in Zeichenebene nach rechts und bewegt sich dabei über einen Vorsprung 51 am Verschleißnachsteller 5 diesen ebenfalls in Zeichenebene nach rechts und löst somit den Kontakt zwischen den Bremsbelägen 6', 6" und der Bremsscheibe 7.

**Figur 6** zeigt eine weitere Ausführungsform einer hydraulisch betätigten Scheibenbremse (Sattelbremse). Bei dieser Ausführungsform handelt es sich um eine Parkbremse bzw. eine Passivbremse. Dies bedeutet, dass die Bremsbeläge an der Bremsscheibe anliegen, wenn kein Bremsdruck auf den Bremsaktuator ausgeübt wird. Die Bremswirkung ist also maximal, wenn der Bremsaktuator nicht betätigt wird, das heißt kein Bremsdruck auf die stirnseitige Begrenzung 12 wirkt.

In dieser Ausführungsform ist der Sattelrahmen 3 der Sattelbremse zweigeteilt in einen ersten Teil 3' und einen zweiten Teil 3". Im ersten Teil 3' des Sattelrahmens befindet sich die Kammer 4, in der eine Wellrohrfeder 1 als Bremsaktuator analog zur in Figur 3 gezeigten Anordnung angeordnet ist. Der Hydraulikanschluss 2 ist ebenfalls wie in Figur 3 so angeordnet, dass die Wellrohrfeder 1 von außen mit Druck beaufschlagt werden kann.

Anders als in der Ausführung in Figur 3 bewegt der Verschleißnachsteller 5 nicht direkt einen der beiden Bremsbeläge 6', 6", sondern den an einer Schwimmlagerung 8 schwimmend gelagerten zweiten Teil 3" des Sattelrahmens. Jeweils einer der beiden Bremsbeläge 6', 6" ist an einem Teil des Sattelrahmens angeordnet. In der dargestellten Stellung liegen die Bremsbeläge 6#, 6" an der Bremsscheibe 7 an, sodass das Belagfreispiel b also gleich null ist.

Wird über den Hydraulikanschluss 2 die Kammer 4 und somit auch die stirnseitige Begrenzung 12 der Wellrohrfeder 1 mit Druck beaufschlagt, so wird die Wellrohrfeder 1 entlang der Längsachse 100 gegen die Elastizität der Mantelfläche 13 der Wellrohrfeder 1 zusammengedrückt, sodass der Verschleißnachsteller 5 eine in Zeichenebene nach links gerichtete Kraft auf den zweiten Teil 3" des Sattelrahmens ausübt, während der Druck den ersten Teil 3' des Sattelrahmens eine in Zeichenebene nach rechts gerichtete Kraft erfährt. Dadurch werden die Bremsbeläge 6', 6" von der Bremsscheibe 7 abgehoben und das Belagfreispiel b vergrößert sich auf einen Betrag größer als null. Die Bremse ist somit gelöst und es ist keine Bremswirkung vorhanden. Wird der Druck aus der Kammer 4 wieder entfernt, dehnt sich die Wellrohrfeder 1 aufgrund der Elastizität der Mantelfläche 13 wieder in Längsrichtung des Verschleißnachstellers 5 aus, wodurch die Bremsbeläge 6 wieder an die Bremsscheibe 7 gedrückt werden, wodurch wiederum erneut die maximale Bremswirkung erreicht wird.

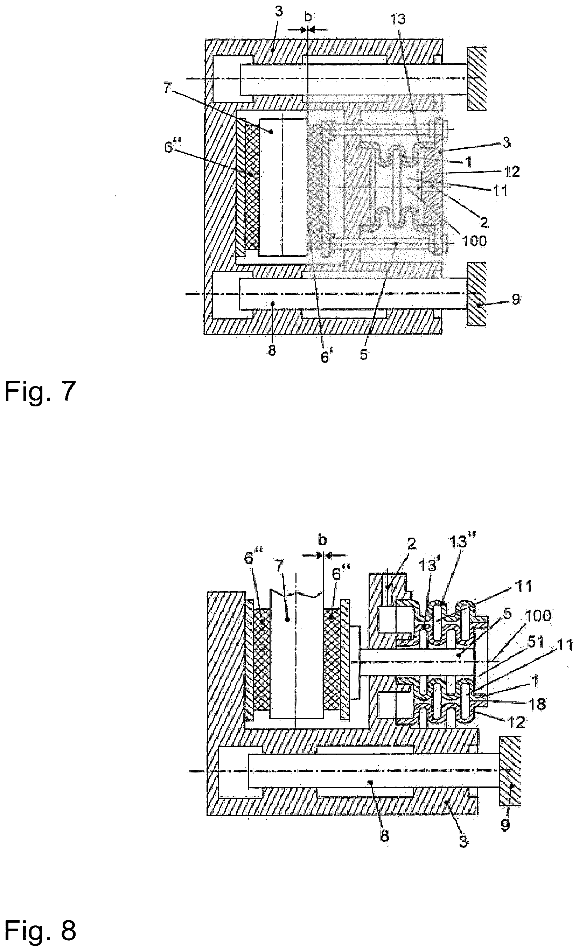

Eine andere Bauart einer Passivbremse ist in **Figur 7** gezeigt. Bei dieser Bauart ist der Sattelrahmen 3 an zwei Schwimmlagerungen 8 gelagert, die auf gegenüberliegenden Seiten der Bremsscheibe 7 angeordnet sind. Ein wesentlicher Unterschied stellt ebenfalls die in dieser Bauart vorgesehene Ausführungsform der Wellrohrfeder 1 als Bremsaktuator dar. Im Unterschied zu den zuvor beschriebenen Ausführungsformen, ist die Wellrohrfeder 1 nicht in einer Kammer des Sattelrahmens 3 angeordnet. Zudem sind in dieser Ausführungsform die Mantelfläche 13 und die stirnseitige Begrenzung 12 der Wellrohrfeder 1 nicht in einem Bauteil ausgeführt. Die stirnseitige Begrenzung 12 ist in Zeichenebene rechts mit der rechten Stirnseite der Mantelfläche 13 dichtend verbunden. Die linke Stirnseite der Wellrohrfeder 1 ist analog zu den in den zuvor gezeigten Ausführungsformen derart mit dem Sattelrahmen 3 verbunden, dass der Hohlraum 11 der Wellrohrfeder 1 gegen die Umgebung abgedichtet ist. Weiterhin sind an den beiden abgebildeten Außenbereichen der stirnseitigen Begrenzung 12 der Wellrohrfeder 1, die über den Umfang der Wellrohrfeder 1 hinausragen, jeweils ein Verschleißnachsteller 5 angeordnet, die mit dem Bremsbelag 6' verbunden sind. Zudem weißt die stirnseitige Begrenzung 12 einen Hydraulikanschluss 2 auf, über den der Hohlraum 11 der Wellrohrfeder 1 mit Druck p beaufschlagt werden kann. Der andere Bremsbelag 6" ist, wie in den zuvor beschriebenen Ausführungsformen mit dem Sattelrahmen 3 fest verbunden. Die Bremse ist derart konfiguriert, dass in der Ausgangsstellung die Bremsbeläge 6' und 6" an der Bremsscheibe 7 anliegen.

Wird der Hohlraum 11 der Wellrohrfeder 1 über den Hydraulikanschluss 2 mit einem Druck p beaufschlagt, so dehnt sich die Wellrohrfeder 1 entlang ihrer Längsachse 100 aus, wodurch die stirnseitige Begrenzung 12 in Zeichenebene nach rechts bewegt wird, und diese über die beiden Verschleißnachsteller 5 die Bewegung an den rechten Bremsbelag 6' überträgt. Gleichzeitig wird über die Stirnseite der Wellrohrfeder 1, die mit dem Sattelrahmen 3 verbunden ist, durch den Druck p im Hohlraum 11 eine Kraft auf den Sattelrahmen 3 hervorgerufen, durch die sich der gesamte Sattelrahmen 3 anhand der Schwimmlagerung 8 in Zeichenebene nach links bewegt, wodurch der an dem Sattelrahmen 3 angeordnete (in Zeichenebene der Linke) Bremsbelag 6" ebenfalls nach links bewegt wird. Somit werden beide Bremsbeläge 6' und 6" bei Druckbeaufschlagung des Hohlraums 11 von der Bremsscheibe 7 gelöst und das Belagfreispiel b zwischen Bremsbelägen 6', 6" und der Bremsscheibe 7 wächst auf einen Wert größer als 0.

**Figur 8** zeigt eine weitere Bauart einer Passivbremse mit einer Doppelwellrohrfeder 1 als Bremsaktuator. Sie weist einen an einer Schwimmlagerung 8 gelagerten Sattelrahmen 3 auf, an dem der in Zeichenebene linke Bremsbelag 6' montiert ist. Die Schwimmlagerung 8 ist analog wie die in den zuvor beschriebenen Bauarten über die Verbindung 9 mit einem Fahrzeug verbunden.

Die Doppelwellrohrfeder 1 als Bremsaktuator setzt sich aus einer runden Mantelfläche mit größerem Durchmesser 13' und einer runden Mantelfläche mit kleinerem Durchmesser 13" zusammen, die jeweils eine vorbestimmte Elastizität in Längsrichtung (Richtung der Längsachse 100) der Wellrohrfeder 1 aufweisen. Die Mantelfläche mit kleinerem Durchmesser 13" ist dabei koaxial mit der Mantelfläche mit größerem Durchmesser 13' angeordnet. Die stirnseitige Begrenzung 12 der Doppelwellrohrfeder 1 wird durch radial nach innen gezogene Enden der äußeren Mantelfläche 13' und radial nach außen gezogene Enden der inneren Mantelfläche 13" gebildet. Die jeweiligen radial nach innen bzw. außen gezogenen Enden sind an einer umlaufenden Flanschstelle 18, welche sich parallel zur Längsrichtung der Wellrohrfeder 1 erstreckt, dichtend miteinander verbunden. Die der stirnseitigen Begrenzung 12 gegenüberliegende Stirnseite der Mantelflächen 13' und 13" sind derart mit dem Sattelrahmen 3 verbunden, dass ein abgedichteter Hohlraum 4 entsteht, der sich um die Längsachse 100 der Wellrohfeder 1 erstreckt.

Der Hydraulikanschluss 2 ist derart im Sattelrahmen 3 angeordnet, dass der Hohlraum 11 der Doppelwellrohrfeder 1 mit einem Druck p beaufschlagt werden kann. Koaxial mit der Längsachse 100 der Wellrohrfeder 1 ist ein Verschleißnachsteller 5 angeordnet, der wie in den anderen bereits beschriebenen Bauarten ebenfalls als Kolben fungiert und somit mit dem in Zeichnungsebene rechten Bremsbelag 6' verbunden ist und diesen von der Bremsscheibe 7 abheben und anlegen kann. Der Verschleißnachsteller 5 ist weiterhin über einen Vorsprung 51 mit der umlaufenden stirnseitigen Begrenzung 12 der Wellrohrfeder 1 verbunden.

Wird der durch die Mantelflächen 13' und 13" gebildete Hohlraum 11 über den Hydraulikanschluss 2 mit dem Druck p beaufschlagt, längt sich die Doppelwellrohrfeder 1 entlang ihrer Längsachse 100, wodurch sich der Verschleißnachsteller 5 in Zeichenebene nach rechts und der Sattelrahmen 3 nach links bewegt. Dadurch werden die beiden Bremsbeläge 6' und 6" von der Bremsscheibe 7 getrennt und es entsteht ein Belagfreispiel b das einen größeren Wert als null aufweist, wodurch die Bremse gelöst ist.

Wird der Druck p wieder vom Hohlraum 11 entfernt, nimmt die Doppelrohrfeder 1 aufgrund ihrer Elastizität ihre Ursprungsform an und die Bremsbeläge 6' und 6" werden wieder an die Bremsscheibe 7 angelegt und somit eine Rotation der Bremsscheibe blockiert.

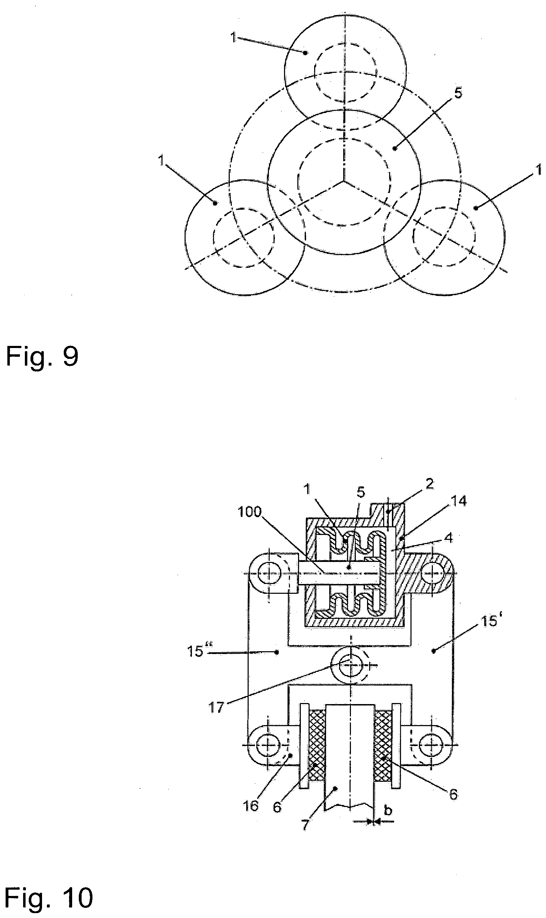

**Figur 9** zeigt eine Prinzipskizze einer weiteren Ausführungsform eines Bremsaktuators für eine Sattelbremse als Passivbremse. Die Anordnung dieser Ausführungsform ist dabei ähnlich wie die Anordnung von Figur 6. Anstelle zweier ineinandergeschobener Mantelflächen 13, wird in Figur 9 allerdings der zentral liegende Verschleißnachsteller 5 durch einzelne runde Wellrohrfedern 1, die radial verteilt um den Verschleißnachsteller 5 angeordnet sind, betätigt. Die Ansicht der Prinzipskizze aus Figur 9 ist dabei um 90 Grad im Vergleich zur Ansicht aus Figur 8 gedreht, sodass die Längsachse der Doppelwellrohrfeder 1 aus Figur 8 in Figur 9 in die Zeichenebene hineinzeigt.

Die Wellrohrfedern 1 werden alle synchron mit Druck versorgt und weisen alle die gleiche Elastizität in deren Längsrichtung (in die Zeichenebene hinein) auf. Werden die Wellrohrfedern mit Druck beaufschlagt, erfolgt eine gemeinsame Betätigung des Verschleißnachstellers 5 und somit der Bremsbeläge (in Figur 9 nicht abgebildet). Analog zur Ausführungsform in Figur 8 wird bei Druckabfall durch die Elastizitäten der Wellrohrfedern 1 der Verschleißnachsteller 5 in die Ausgangsposition zurückgebracht und die Bremsbeläge wieder angelegt.

Neben den Sattelbremsen der bisherigen Ausführung ist eine Vorrichtung ebenfalls in Ausführungsformen von Zangenbremsen möglich. **Figur 10** zeigt eine Bauart einer Zangenbremse in der eine erfindungsgemäße Wellrohrfeder als Bremsaktuator eingesetzt wird.

Die Bremsbeläge 6, die an der Bremsscheibe 7 angelegt sind, sind jeweils über einen Halter 16 mit zwei Zangenhebeln 15' und 15" verbunden. Diese weisen einen gemeinsamen Drehpunkt 17 auf, der in Zeichenebene oberhalb der Bremsscheibe 7 angeordnet ist. Darüber, auf der entgegengesetzten Seite der Bremsbeläge 6, ist zwischen den jeweiligen Enden der Zangenhebel 15' und 15" ein Aktuatorgehäuse 14 vorgesehen. Dieses ist auf der einen Seite (in Zeichnung rechts) drehbar mit dem rechten Zangenhebel 15' verbunden. Auf der anderen Seite führt aus dem Aktuatorgehäuse 14 ein Verschleißnachsteller 5, der an dem linken Zangenhebel 15" drehbar gelagert ist.

Innerhalb des Aktuatorgehäuses 14 ist eine Wellrohrfeder 1 mit einer festgelegten Federhärte als Bremsaktuator in einer Kammer 4 angeordnet. Die Anordnung der Wellrohrfeder 1 in der Kammer 4 ist dabei identisch mit der Anordnung der Wellrohrfeder 1 in der Kammer 4 der in den Figuren 3 und 4 dargestellten Ausführungsform. Außerdem ist am Aktuatorgehäuse 14 ebenfalls der Hydraulikanschluss 2 vorgesehen, über den die Kammer 4 mit einem Druck p beaufschlagt werden kann.

In der abgebildeten Stellung wirkt bereits ein Druck in der Kammer 4, sodass die Bremsbeläge 6 an der Bremsscheibe 7 anliegen und das Belagfreispiel b folglich gleich null ist. Wird der Druck in der Kammer 4 erhöht, wirkt dieser auf die Wellrohrfeder 1 entlang ihrer Längsachse 100. Dadurch wirkt auf den Verschleißnachsteller 5 eine Kraft in die eine Richtung (nach links in Zeichenebene) und auf das Aktuatorgehäuse 14 die gleiche Kraft in die andere Richtung (nach rechts in Zeichenebene). Über die Zangenhebel 15' und 15" können somit die Kräfte auf die Bremsbeläge 6 geleitet und die Reibung zwischen Bremsscheibe 7 und Belägen 6 erhöht werden.

Sobald der Druck in der Kammer 4 wieder reduziert wird, sinkt die von den Bremsbelägen 6 auf die Bremsscheibe 7 wirkende Kraft wieder. Fällt der Druck p unter einen definierten Wert, lösen sich die Bremsbeläge 6 von der Bremsscheibe 7 und das Belagfreispiel b wird größer als null, wodurch die Bremswirkung aufgehoben wird. Die Bewegung der Bremsbeläge 6 weg von der Bremsscheibe 7 wird dabei durch die Elastizität der Wellrohrfeder 1 hervorgerufen.

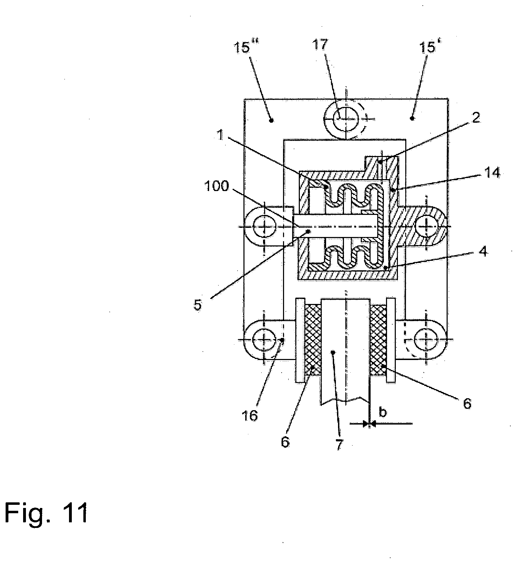

**Figur 11** zeigt eine ähnliche Anordnung einer Zangenbremse wie Figur 10. Auch hier sind die Bremsbeläge 6 über entsprechende Halter 16 mit jeweils einem Zangenhebel 15' bzw. 15" verbunden. Die Zangenhebel weisen analog zur Ausführung in Figur 8 einen gemeinsamen Drehpunkt 17 auf. Der Bremsaktuator ist auch hier in einem Aktuatorgehäuse 14 vorgesehen, in dem die Anordnung der Wellrohrfeder 1 und des Verschleißnachstellers 5 der Anordnung aus Figur 10 entspricht.

Im Gegensatz zur Anordnung in Figur 10 ist das Aktuatorgehäuse 14 allerdings zwischen dem gemeinsamen Drehpunkt 17 der Zangenhebel 15', 15" und den Bremsbelägen 6 angeordnet. Daraus ergibt sich, dass es sich bei dieser Anordnung um eine Passivbremse handelt, die also im drucklosen Zustand eingebremst ist. In diesem Zustand drücken die Bremsbeläge 6 also mit maximaler Kraft auf die Bremsscheibe 7 und das Belagfreispiel b ist folglich null. Die maximale Kraft wird dabei ausschließlich durch die Elastizität der Mantelfläche der Wellrohrfeder 1 hervorgerufen.

Wird Druck über den Hydraulikanschluss 2 in die Kammer 4 geleitet, wird die Wellrohrfeder 1 innerhalb der Kammer 4 entlang ihrer Längsachse 100 komprimiert, wodurch sich über den Verschleißnachsteller 5 der linke Zangenhebel 15" in Zeichenebene nach links und der rechte Zangenhebel 15' in die entgegengesetzte Richtung bewegt. Dadurch wird das Belagfreispiel b zwischen den Bremsbelägen 6 und der Bremsscheibe 7 erhöht, wodurch die Wellrohrfeder gegen die Elastizität der Wellrohrfeder 1 in Längsrichtung gestaucht wird und die Bremsbeläge 6 somit von der Bremsscheibe 7 gelöst werden. Wird der Druck wiederum aus der Kammer 4 entlassen, bewegt sich der beschriebene Mechanismus aufgrund der durch die Elastizität der Wellrohrfeder 1 induzierten Kraft in die entgegengesetzte Richtung und die Bremsbeläge 6 liegen wieder an der Bremsscheibe 7 an.

Für die Funktion der Wellrohrfeder 1 in allen oben beschriebenen Ausführungsformen sind Dichtungen erforderlich, die den Hohlraum der Wellrohrfeder 1 von der Umgebung isolieren. Diese Dichtungen können allerdings im Gegensatz zu den Dichtungen im Stand der Technik so ausgeführt werden, dass sie bei der Beaufschlagung des Hohlraums bzw. der Umgebung nicht bewegt werden. Es handelt sich also im Gegensatz zum gängigen Stand der Technik um statische Dichtungen, die einen deutlich geringeren Verschleiß als bewegte druckbeaufschlagte Dichtungen aufweisen. Der verringerte Verschleiß führt somit zu einer maßgeblich erhöhten Einsatzzeit der Bremsaktuatoren ohne einen Austausch von Dichtungen.

### BEZUGSZEICHENLISTE

- 1: Wellrohrfeder
- 2: Hydraulikanschluss
- 3: Sattelrahmen
- 4: Kammer
- 5: Verschleißnachsteller
- 6: Bremsbeläge
- 6': rechter Bremsbelag
- 6": linker Bremsbelag
- 7: Bremsscheibe
- 8: Schwimmlagerung
- 9: Anbindung an das Fahrzeug
- 11: Hohlraum
- 12: stirnseitige Begrenzung
- 12a: Gewindeabschnitt (stirnseitige Begrenzung)
- 13: Mantelfläche
- 14: Aktuatorgehäuse
- 15': rechter Zangenhebel
- 15": linker Zangenhebel
- 16: Halter
- 17: Drehpunkt
- 20: Grundplatte
- 21: Gegenanschlag
- 22: Ankeranschlag
- 23: Ankeraufnahme
- 24: Befestigungsaufnahme
- 30: Anschlagelement
- 31: Anschlagfläche
- 32: Anschlagelementgewindeabschnitt
- 33: Gewindeabschnitt (Anschlagelement)
- 40: Zuganker
- 41: Ankerabschnitt
- 42: Zugankergewindeabschnitt
- 51: Vorsprung
- 60: Dichtung
- 100: Längsachse der Mantelfläche
- b: Belagfreispiel
- p: Druck

## Patentansprüche

1. Aktuatorvorrichtung bestehend aus mindestens einem länglich ausgebildeten Körper mit einer Längsachse (100), aufweisend:
eine Mantelfläche (13), welche sich um seine Längsachse (100) erstreckt und einen Hohlraum (11) bildet, wobei die Mantelfläche (13) zumindest abschnittsweise eine vorbestimmte Elastizität in Längsrichtung aufweist,
eine Grundplatte (20), dazu konfiguriert den Hohlraum (11) an einer Stirnseite in axialer Richtung der Längsachse (100) zu begrenzen, und
eine stirnseitige Begrenzung (12), dazu konfiguriert den Hohlraum (11) an einer der Grundplatte (20) gegenüberliegenden Stirnseite in axialer Richtung der Längsachse (100) dichtend abzuschließen, wobei
der Hohlraum (11) durch Einleitung oder Ausleitung eines Fluids mit einem Druck beaufschlagbar ist, so dass die Aktuatorvorrichtung durch den Druck aufgrund der vorbestimmten Elastizität elastisch gelängt oder gestaucht werden kann, und **dadurch gekennzeichnet, dass**
die Aktuatorvorrichtung derart konfiguriert ist, dass die über die Längung oder Stauchung in Form von Formänderungsarbeit gespeicherte Energie als Bewegungsenergie zur Ausübung einer Aktuatorfunktion zur Verfügung stellbar ist.

2. Aktuatorvorrichtung gemäß dem vorherigen Anspruch, wobei die Aktuatorvorrichtung zumindest ein Begrenzungselement (30, 40) aufweist, dazu konfiguriert die Längung und/oder Stauchung der Aktuatorvorrichtung zu begrenzen.

3. Aktuatorvorrichtung gemäß einem der vorherigen Ansprüche, wobei die Mantelfläche (13) entlang der Längsachse (100) der Mantelfläche (13) zumindest abschnittsweise als Wellrohrfeder ausgebildet ist.

4. Aktuatorvorrichtung gemäß einem der Ansprüche 2 bis 3, wobei das Begrenzungselement (30, 40) positionsfest in der stirnseitigen Begrenzung (12) oder der Grundplatte (20) haltbar und in Richtung der Längsachse (100) relativ zur gegenüberliegenden Grundplatte (20) bzw. stirnseitigen Begrenzung (12) über einen zumindest in einer Bewegungsrichtung vorbestimmten Bewegungsweg bewegbar ist.

5. Aktuatorvorrichtung gemäß Anspruch 4, wobei das Begrenzungselement als Anschlagelement (30) mit einer Anschlagfläche (31), durch die eine Stauchung der Aktuatorvorrichtung in Zusammenwirken mit einem Gegenanschlag (21) begrenzt wird, ausgebildet ist oder dieses aufweist.

6. Aktuatorvorrichtung gemäß Anspruch 5, wobei ein Gegenanschlag (21) bei positionsfester Halterung des Anschlagelements (30) in der stirnseitigen Begrenzung (12) durch die Grundplatte (20) oder bei positionsfester Halterung des Anschlagelements (30) in der Grundplatte (20) durch die stirnseitige Begrenzung (12) gebildet wird.

7. Aktuatorvorrichtung gemäß Anspruch 5 oder 6, wobei die Position, in der das Anschlagselement (30) positionsfest haltbar ist, und/oder die Position der Anschlagfläche (31) einstellbar ist.

8. Aktuatorvorrichtung gemäß einem der Ansprüche 5 bis 7, wobei das Anschlagelement (30) zumindest einen Anschlagelementgewindeabschnitt (32) aufweist, der in einen Gewindeabschnitt (12a) der stirnseitigen Begrenzung (12) oder der Grundplatte (20) eingreift.

9. Aktuatorvorrichtung gemäß einem der Ansprüche 4 bis 8, wobei das Begrenzungselement als Zuganker (40) mit einem Ankerabschnitt (41), durch den die Längung der Aktuatorvorrichtung in Zusammenwirken mit einem Ankeranschlag (22) begrenzt wird, ausgebildet ist oder diesen aufweist.

10. Aktuatorvorrichtung gemäß Anspruch 9, wobei die der positionsfesten Halterung gegenüberliegende Grundplatte (20) bzw. stirnseitige Begrenzung (12) eine Ankeraufnahme (23) aufweist, in der der Ankerabschnitt durch den Ankeranschlag (22) haltbar ist.

11. Aktuatorvorrichtung gemäß Anspruch 9 oder 10, wobei die Position, in der der Zuganker (40) positionsfest haltbar ist, und/oder die Position des Ankerabschnitts (41) einstellbar ist.

12. Aktuatorvorrichtung gemäß einem der Ansprüche 9 bis 11, wobei der Zuganker (40) durch das Anschlagelement (30) gemäß den Ansprüchen 4 bis 7 in Richtung der Längsachse (100) hindurchgeführt wird.

13. Aktuatorvorrichtung gemäß einem der Ansprüche 9 bis 12, wobei der Zuganker (40) zumindest einen Zugankergewindeabschnitt (42) aufweist, der in einen Gewindeabschnitt (33) des Anschlagelements nach Anspruch 11, der stirnseitigen Begrenzung (12) oder der Grundplatte (20) eingreift.

14. Aktuatorvorrichtung gemäß einem der bisherigen Ansprüche, wobei sich das Begrenzungselement (30, 40) in Richtung der Längsachse (100) durch den Hohlraum (11) erstreckt.

15. Aktuatorsystem mit einer Aktuatorvorrichtung gemäß einem der vorherigen Ansprüche, wobei dem Aktuatorsystem durch Aufhebung der druckbedingten Längung oder Stauchung der Aktuatorvorrichtung Energie zur Ausübung einer Aktuatorfunktion zuführbar ist.

16. Aktuatorsystem gemäß Anspruch 15, wobei das Aktuatorsystem dazu konfiguriert ist, in einem Bremssystem eingesetzt zu werden, und durch die Ausübung der Aktuatorfunktion eine Bremskraft ausübbar ist.

## Claims

1. Actuator device consisting of at least one body of an oblong design with a longitudinal axis (100), the device having:
an outer surface (13) extending around its longitudinal axis (100) and forming a cavity (11), at least sections of the outer surface (13) having a predetermined elasticity in the longitudinal direction,
a base plate (20) configured to bound the cavity (11) at an end face in the axial direction of the longitudinal axis (100),
an end face boundary (12) configured to close off the cavity (11) at an end face opposite the base plate (20) in the axial direction of the longitudinal axis (100) while forming a seal, wherein
wherein a pressure can be applied to the cavity (11) by introducing or discharging a fluid, so that the actuator device can be elastically elongated or compressed by the pressure as a result of the predetermined elasticity, and **characterised in that**
the actuator device is configured in such a way that the energy stored in the form of elastic displacement activity can be made available as working energy for performing an actuator function.

2. Actuator device according to the preceding claim, wherein the actuator device has at least one limiting element (30, 40) configured to limit the elongation and/or compression of the actuator device.

3. Actuator device according to any of the preceding claims, wherein at least sections of the outer surface (13) are designed as a bellow spring along the longitudinal axis (100) of the outer surface (13),

4. Actuator device according to any of claims 2 to 3, wherein the limiting element (30, 40) can be held in a fixed position in the end face boundary (12) or in the base plate (20) and moved in the direction of the longitudinal axis (100) relative to the opposite base plate (20) or end face boundary (12) along a movement distance predetermined in at least one movement direction.

5. Actuator device according to claim 4, wherein the limiting element is designed as or has a stop element (30) with a stop face (31), whereby a compression of the actuator device is limited in collaboration with a counter-stop (21).

6. Actuator device according to claim 5, wherein a counter-stop (21) is represented by the base plate (20) if the stop element (30) is held in a fixed position in the end face boundary (12) or by the end face boundary (12) if the stop element (30) is held in a fixed position in the base plate (20).

7. Actuator device according to claim 5 or 6, wherein the position in which the stop element (30) can be held in a fixed position and/or the position of the stop face (31) are/is adjustable.

8. Actuator device according to any of claims 5 to 7, wherein the stop element (30) has at least one stop element threaded section (32) engaging with a threaded section (12a) of the end face boundary (12) of the base plate (20).

9. Actuator device according to any of claims 4 to 8, wherein the limiting element is designed as or has a tie rod (40) with a tie rod section (41), whereby the elongation of the actuator device is limited in collaboration with a tie rod stop (22).

10. Actuator device according to claim 9, wherein the base plate (20) or the end face boundary (12) located opposite the fixed-position hold has a tie rod receptacle (23), in which the tie rod section can be held by the tie rod stop (22).

11. Actuator device according to claim 9 or 10, wherein the position in which the tie rod (40) can be held in a fixed position and/or the position of the tie rod section (41) are/is adjustable.

12. Actuator device according to any of claims 9 to 11, wherein the tie rod (40) is passed through the stop element (30) according to claims 4 to 7 in the direction of the longitudinal axis (100).

13. Actuator device according to any of claims 9 to 12, wherein the tie rod (40) has at least one tie rod threaded section (42) engaging with a threaded section (33) of the stop element according to claim 11, the end face boundary (12) or the base plate (20).

14. Actuator device according to any of the preceding claims, wherein the limiting element (30, 40) extends through the cavity (11) in the direction of the longitudinal axis (100).

15. Actuator system having an actuator device according to any of the preceding claims, wherein the actuator system can be supplied with energy for performing an actuator function by cancelling the pressure-induced elongation or compression of the actuator device.

16. Actuator system according to claim 15, wherein the actuator system is configured for use in a brake system and a braking force can be applied by performing the actuator function.

## Revendications

1. Dispositif actionneur constitué d'une pièce de constitution oblongue ayant un axe (100) longitudinal, comportant
une surface (13) latérale, qui s'étend autour de son axe (100) longitudinal et qui forme une cavité (11), la surface (13) latérale ayant, dans la direction longitudinale, au moins par endroit une élasticité déterminée à l'avance,
une plaque (20) de fond, configurée pour délimiter la cavité (11) sur un côté frontal dans une direction axiale de l'axe (100) longitudinal, et
une limitation (12) du côté frontal, configurée pour fermer de manière étanche la cavité (11) sur, dans la direction axiale de l'axe (100) longitudinal, un côté frontal opposé à la plaque (20) de fond, dans lequel
la cavité (11) peut être soumise à une pression par l'entrée ou la sortie d'un fluide, de manière à pouvoir allonger ou refouler, élastiquement en raison de l'élasticité définie à l'avance, le dispositif actuateur par la pression, et **caractérisé en ce que**
le dispositif actuateur est configuré, de manière à ce que l'énergie accumulée par l'allongement ou le refoulement, sous la forme de travail de modification de forme, puisse être mise à disposition comme énergie de déplacement pour l'exercice d'une fonction d'actuateur.

2. Dispositif actuateur suivant la revendication précédente, dans lequel
le dispositif actuateur a au moins un élément (30, 40) de limitation, qui est configuré pour limiter l'allongement et/ou le refoulement du dispositif actionneur.

3. Dispositif actuateur suivant l'une des revendications précédentes, dans lequel
la surface (13) latérale est constituée le long de l'axe (100) longitudinal de la surface (13) latérale au moins par endroit sous la forme d'un ressort tubulaire ondulé.

4. Dispositif actuateur suivant l'une des revendications 2 à 3, dans lequel
l'élément (30, 40) de limitation peut être retenu en position fixe dans la limitation (12) du côté frontal ou dans la plaque (20) latérale et peut être déplacé dans la direction de l'axe (100) longitudinal par rapport à la plaque (20) de fond ou à la limitation (12), du côté frontal opposé, sur un trajet de déplacement déterminé à l'avance au moins dans une direction de déplacement.

5. Dispositif actuateur suivant la revendication 4, dans lequel l'élément de limitation est constitué sous la forme d'un élément (30) de butée ayant une surface (31) de butée, par laquelle un refoulement du dispositif actionneur est limité en coopération avec une contrebutée (21), ou a cet élément de butée.

6. Dispositif actuateur suivant la revendication 5, dans lequel une contrebutée (21), alors que l'élément (30) de butée est retenu en position fixe dans la limitation (12) du côté frontal, est formée par la plaque (20) de fond ou, alors que l'élément (30) de butée est maintenu en position fixe dans la plaque (20) de fond, est formée par la limitation (12) du côté frontal.

7. Dispositif actuateur suivant la revendication 5 ou 6, dans lequel la position dans laquelle l'élément (30) de butée peut être maintenu en position fixe et/ou la position de la surface (31) de butée est réglable.

8. Dispositif actuateur suivant l'une des revendications 5 à 7, dans lequel l'élément (30) de butée a au moins une partie (32) filetée d'élément de butée, qui engrène dans une partie (12a) filetée de la limitation (12) du côté frontal ou de la plaque (20) de fond.

9. Dispositif actuateur suivant l'une des revendications 4 à 8, dans lequel l'élément de limitation est constitué sous la forme d'un tirant (40) d'ancrage ayant une partie (41) d'ancrage, par laquelle l'allongement du dispositif actionneur est limité en coopération avec une butée (22) d'ancrage ou a cet élément de limitation.

10. Dispositif actuateur suivant la revendication 9, dans lequel la plaque (20) de fond ou la limitation (12), du côté frontal opposée, de maintien en position fixe a un logement (23) d'ancrage, dans lequel la partie d'ancrage peut être retenue par la butée (22) d'ancrage.

11. Dispositif actuateur suivant la revendication 9 ou 10, dans lequel la position, dans lequel le tirant (40) d'ancrage peut être maintenu fixe en position et/ou la position de la partie (41) d'ancrage est réglable.

12. Dispositif actuateur suivant l'une des revendications 9 à 11, dans lequel le tirant (40) d'ancrage traverse l'élément (30) de butée suivant les revendications 4 à 7 dans la direction de l'axe (100) longitudinal.

13. Dispositif actuateur suivant l'une des revendications 9 à 12, dans lequel le tirant (40) d'ancrage a au moins une partie (42) filetée de tirant d'ancrage, qui engrène dans une partie (33) filetée de l'élément de butée suivant la revendication 11, de la limitation (12) du côté frontal ou de la plaque (20) de base.

14. Dispositif actuateur suivant l'une des revendications précédentes, dans lequel l'élément (30, 40) de limitation s'étend dans la cavité (11) dans la direction de l'axe (100) longitudinal.

15. Système d'actionneur ayant un dispositif d'actionneur suivant l'une des revendications précédentes, dans lequel de l'énergie pour exercer une fonction d'actionneur peut être envoyée au système d'actionneur par suppression de l'allongement ou du refoulement du dispositif actionneur dû à la pression.

16. Système d'actionneur suivant la revendication 15, dans lequel le système d'actionneur est configuré pour être utilisé dans un système de freinage, et une fonction de freinage peut être exercée par l'exercice de la fonction d'actionneur.
